Europäisches Patentamt

(19) European Patent Office

Office européen des brevets

(11) **EP 0 680 871 B1**

(12) **FASCICULE DE BREVET EUROPEEN**

(45) Date de publication et mention
de la délivrance du brevet:
**25.03.1998 Bulletin 1998/13**

(51) Int. Cl.$^6$: **B64C 27/82**

(21) Numéro de dépôt: **95400996.5**

(22) Date de dépôt: **02.05.1995**

(54) **Dispositif anti-couple à rotor caréné et modulation de phase des pales, pour hélicoptère**

Gegendrehmomentvorrichtung mit einem eingelassenen Heckrotor und Phasenmodulation der Rotorblattstellung eines Hubschraubers

Anti-torque device with shrouded rotor and phase modulation of the rotor blades positions for helicopters

(84) Etats contractants désignés:
**DE GB IT**

(30) Priorité: **04.05.1994 FR 9405477**

(43) Date de publication de la demande:
**08.11.1995 Bulletin 1995/45**

(73) Titulaire: **EUROCOPTER**
**F-13725 Marignane Cédex (FR)**

(72) Inventeurs:
• **Marze, Henri-James Richard**
**F-13340 Rognac (FR)**
• **Routhieau, Vincent Jean Luc**
**F-13090 Aix-en-Provence (FR)**
• **Arnaud, Gilles Louis**
**F-13009 Marseille (FR)**
• **Arnaud, Rémy Elian**
**F-13127 Vitrolles (FR)**

(74) Mandataire:
**Bérogin, Francis et al**
**Cabinet Plasseraud**
**84, rue d'Amsterdam**
**75440 Paris Cedex 09 (FR)**

(56) Documents cités:
**EP-A- 0 107 543          EP-A- 0 562 527**
**US-A- 5 131 604**

• **PROCEEDINGS OF THE NINETEENTH EUROPEAN ROTORCRAFT FORUM, 14 Septembre 1993 CERNOBBIO (ITALY), pages D4-1-D4-13, VIALLE, ARNAUD 'A NEW GENERATION OF FENESTRON FAN-IN-FIN TAIL ROTOR ON EC 135'**
• **THE JOURNAL OF OF THE ACOUSTICAL SOCIETY OF AMERICA, vol. 49, no. 5, 1971 pages 1381-1385, EWALD D. 'NOISE REDUCTION BY APPLYING MODULATION PRINCIPLES'**

Printed by Xerox (UK) Business Services
2.15.12/3.4

**Description**

L'invention concerne les dispositifs anti-couple à rotor arrière caréné et modulation de phase des pales, pour hélicoptère, et s'applique notamment aux dispositifs de ce type, dans lesquels un stator redresseur, comprenant des aubes fixes à profil aérodynamique, est fixé en aval du rotor dans la veine d'écoulement d'air ménagée transversalement dans la carène intégrée dans la structure des ensembles arrière d'un hélicoptère, tels que la poutre de queue, l'empennage ou une dérive. Les perfectionnements apportés par l'invention à des dispositifs anti-couple de ces types permettent d'améliorer leurs performances acoustiques et/ou aérodynamiques, pour procurer une réduction sensible du bruit et des nuisances acoustiques associées, ainsi qu'un meilleur contrôle en lacet, respectivement.

On sait que l'équilibre en lacet des hélicoptères à un seul rotor principal, obtenu en contrant le couple créé par la rotation du rotor principal, peut être assuré au moyen d'un rotor anti-couple caréné dans une veine transversale dans la partie arrière de l'hélicoptère, plutôt que, de manière classique, au moyen d'un rotor de queue externe, monté latéralement sur l'empennage, à l'extrémité supérieure de ce dernier.

La structure et la disposition d'un tel rotor anti-couple caréné, de ses moyens d'entraînement en rotation, des moyens de commande collective du pas de ses pales, ainsi que les avantages d'une telle réalisation ont été présentés dans de nombreux brevets, parmi lesquels on peut citer les brevets français FR 1 531 536 et FR 2 534 222 (concernant un dispositif anti-couple à rotor et stator redresseur carénés) et les brevets américains US-3,594,097, US-4,809,931, US-4,626,172 et US-4,626,173, et le brevet américain US-5,131,604, auxquels on se reportera avantageusement pour plus de précisions à ce sujet.

On se contente de rappeler que, sur le plan de la sécurité, un rotor anti-couple caréné prévient tout risque d'accident corporel au sol, du fait qu'il est protégé à l'intérieur de la veine dans la poutre de queue, contrairement à un rotor arrière classique. Cette disposition du rotor anti-couple caréné lui permet également d'éviter d'ingérer tout objet dommageable pouvant être entraîné dans le sillage du rotor principal. En vol ou en manoeuvre à proximité du sol ou sur le sol, le rotor anti-couple caréné est naturellement protégé par son carénage, ce qui prévient tout risque de choc avec des obstacles externes tels que des lignes électriques, des branches, des constructions ou même le sol, qui peuvent entraîner des dommages fatals à un rotor arrière classique, et donc la perte de l'hélicoptère, avec toutes les conséquences qui en découlent pour l'équipage. Enfin, la plus petite surface du disque rotor et le nombre de pales plus élevé d'un rotor anti-couple caréné par rapport à un rotor arrière classique rendent la vulnérabilité du premier aux impacts, tels que des projectiles militaires, beaucoup plus faible et moins critique que sur un rotor arrière classique.

Sur le plan aérodynamique, un rotor anti-couple caréné permet d'éliminer un certain nombre de problèmes qui se manifestent lors de l'équipement d'un hélicoptère avec un rotor arrière classique. Dans ce dernier cas, afin de créer une vitesse induite suffisante pour récupérer un niveau de poussée latérale nécessaire à la fonction anti-couple, le diamètre d'un rotor arrière classique est généralement important. Afin de minimiser les interactions avec le souffle du rotor principal et assurer une garde au sol suffisante, un rotor arrière classique est généralement monté en un point haut sur la dérive, ce qui créé un moment de roulis sur l'hélicoptère, qu'il faut équilibrer, et génère une traînée parasite en vol d'avancement à vitesse élevée. Du fait de sa position exposée, un rotor arrière classique peut être fortement sollicité par des charges dynamiques restreignant sa durée de vie. De plus, l'effet de blocage aérodynamique d'un rotor arrière classique, dû au masque de la dérive, engendre un comportement fortement dissymétrique par vent de travers, et des charges aérodynamiques périodiques impulsionnelles néfastes.

Un rotor arrière caréné ne présente pas ces désavantages. En général, il peut facilement être disposé de sorte que son axe coupe sensiblement l'axe de roulis de l'hélicoptère, ou soit proche de cet axe de roulis, de sorte qu'il ne créé pas de moment de roulis parasite. De plus, du fait de son carénage, il produit approximativement la moitié de sa poussée totale d'anti-couple par le seul phénomène de succion par le collecteur, à l'entrée de la veine qui le loge. Ceci permet de décharger d'autant les pales du rotor, qui ne subissent pratiquement pas de sollicitations dynamiques, en raison de la protection efficace assurée par le carénage vis-à-vis des variations externes du flux d'air, en provenance du rotor principal et du fuselage de l'hélicoptère. En vol d'avancement à vitesse élevée de ce dernier, le rotor anti-couple caréné est déchargé, ce qui diminue d'autant sa contribution à la traînée globale de l'appareil. Dans cette configuration, la dérive verticale, éventuellement équipée d'un volet braquable, assure la fonction anti-couple. De plus, aucun plan de dérive ou d'empennage ne gène le fonctionnement du rotor anti-couple caréné, ce qui lui confère une efficacité maximale par vent de travers et lors de manoeuvres rapides autour de l'axe de lacet.

L'adjonction d'un stator redresseur à aubes profilées en aval du rotor et dans la veine de carénage de ce dernier, pour récupérer l'énergie de rotation du flux d'air en aval du rotor sous forme de poussée anti-couple complémentaire et accroître ainsi la performance aérodynamique du dispositif anti-couple, comme décrit dans le brevet français FR 2 534 222, permet de renforcer l'efficacité d'un rotor arrière caréné et d'atteindre une figure de mérite largement supérieure à celle des meilleurs rotors arrière classiques.

Enfin, pour une veine guidée logeant un rotor anti-couple caréné, le rapport de diffusion est voisin de 1, et peut être augmenté en augmentant l'angle de divergence d'une partie tronconique de diffuseur que la veine peut comporter en aval du plan de rotation des pales du rotor, comme décrit par exemple dans le brevet américain US-5,131,604, où cet angle de divergence est limité à 5°. Au contraire, la contraction du sillage sur un rotor arrière classique fige le rapport de diffusion à 1/2, ce qui empêche toute amélioration de performances au moyen de ce paramètre.

Du point de vue acoustique, un rotor arrière caréné tire encore avantage de son positionnement dans une veine de carénage : au contraire d'un rotor arrière classique, qui rayonne du bruit dans toutes les directions, la détectabilité d'un rotor arrière caréné vers l'avant et vers l'arrière, dans la direction d'avancement de l'hélicoptère, est fortement réduite du fait du carénage. Par ailleurs, la combinaison d'une vitesse de rotation angulaire $\Omega$ et d'un nombre de pales b plus élevés sur un rotor anti-couple caréné que sur un rotor arrière classique produit une "fréquence de passage de pales" b x $\Omega$ et ses fréquences multiples n b $\Omega$ qui sont des fréquences beaucoup plus élevées de concentration de l'énergie acoustique que pour un rotor arrière classique, et typiquement dans le domaine des fréquences de 400 Hz à 2000 Hz. Or ces fréquences sont très vite atténuées dans l'atmosphère, alors que les très basses fréquences de concentration d'énergie acoustique d'un rotor arrière classique se propagent loin.

Cependant, un inconvénient des rotors anti-couple carénés est que le fait d'élever le niveau des fréquences de concentration d'énergie acoustique place ces dernières dans une zone de fréquence de maximum de sensibilité de l'oreille humaine. De plus, l'aspect très impulsif d'un spectre de bruit de rotor anti-couple caréné, pour lequel la majeure partie de l'énergie acoustique est concentrée sur les deux ou trois premières raies très étroites du spectre, se traduit par un sifflement caractéristique très pénible à l'oreille humaine, et qui est fortement pénalisé par les critères de certification acoustique au moyen des "corrections de sons purs ou raies émergentes". Au plan militaire, la signature acoustique caractéristique d'un rotor anti-couple caréné est également un phénomène préjudiciable, facilitant l'identification de l'hélicoptère.

Indépendamment de la répartition de l'énergie acoustique dans le domaine de fréquences, telle que mentionnée ci-dessus, le niveau global d'énergie acoustique dissipée est le second facteur principal pour juger de la qualité du niveau acoustique d'un hélicoptère. Comme évoqué ci-dessus, et mentionné plus particulièrement dans le brevet américain US-5,131,604, le fonctionnement aérodynamique d'un rotor anti-couple caréné, à nombre de pales élevé et pour lequel la poussée anti-couple est assurée pour moitié par la succion, entraîne une charge par pale inférieure à celle subie par les pales d'un rotor arrière classique, et donc un niveau de bruit de charge inférieur.

Par contre, la présence d'obstacles fixes dans la veine de carénage du rotor anti-couple, en aval de ce dernier, comme par exemple des bras de support d'une boîte de transmission arrière associée à un mécanisme de commande collective du pas des pales, et sur laquelle le rotor est monté en rotation, ou encore comme un stator redresseur à aubes profilées fixes, par exemple, peut fortement augmenter le niveau d'énergie acoustique rayonnée.

Pour cette raison, US-5,131,604 propose que les trois bras support soient de section elliptique, l'un étant radial et aligné avec l'axe longitudinal de l'hélicoptère et les deux autres parallèles à l'axe vertical du carénage, mais décalés vers l'arrière, l'écartement, selon l'axe de la veine, entre le plan de rotation du rotor et les bras support étant de 2 à 2,5 fois le petit axe de l'ellipse de la section des bras. Ces formes et dispositions permettent de diminuer sensiblement les raies d'interactions acoustiques entre le rotor et les bras support, pour un rotor à huit pales dont la vitesse périphérique est limitée à environ 225 m/s.

Par ailleurs, pour réduire l'émission sonore d'avions à hélice, il a déjà été proposé par le brevet français FR 2 622 170 que l'hélice possède un nombre de pales pair et supérieur ou égal à quatre, les pales étant diamétralement opposées deux à deux, et les paires de pales étant disposées décalées les unes par rapport aux autres avec un pas d'écart angulaire compris entre approximativement 15° et 50°, de telle sorte que les niveaux des harmoniques de bruit de rotation soient affaiblis par interférences.

Pour réduire l'émission sonore d'un rotor arrière caréné d'hélicoptère, il a également été proposé dans la demande de brevet européen EP 562 527 une répartition non équi-angulaire des pales du rotor. Mais, comme cette répartition non équi-angulaire peut conduire à des impossibilités structurelles de liaison des pales au moyeu du rotor, sans que les pales avec leur levier de commande de pas n'interfèrent les unes avec les autres, ce document ne propose de répartition non équi-angulaire qu'en combinaison avec le groupement des pales en deux groupes dans lesquels les leviers de commande de pas présentent des calages angulaires différents, de sorte que sur une partie de la plage de pas, la poussée anti-couple est principalement assurée par un groupe de pales, alors que sur l'autre partie de la plage de pas, elle est principalement assurée par l'autre groupe de pales, alors que les pales du premier groupe parviennent au décrochage.

Un but de l'invention est de proposer des perfectionnements pour la réalisation d'un dispositif anti-couple à rotor caréné de nuisances acoustiques minimales, destiné à équiper un hélicoptère propulsé au moyen d'un unique rotor principal, tout en conservant, voire même en améliorant, la performance aérodynamique du dispositif anti-couple caréné, par rapport aux ensembles connus de ce type.

Un autre but de l'invention est de proposer une loi de répartition angulaire des pales du rotor, de manière à répartir le plus efficacement possible l'énergie acoustique dans tout le spectre de fréquences, en tenant compte des limitations des possibilités mécaniques de liaison des pales au moyeu du rotor, et cela même lorsque le dispositif anti-couple comprend un rotor caréné ne coopérant pas avec un stator redresseur en aval.

Dans le cas où le dispositif anti-couple comprend un rotor et un stator redresseur carénés, un autre but de l'invention est de proposer des répartitions angulaires des pales du rotor tenant compte de la répartition angulaire des aubes du redresseur, pour éviter leur interaction directe et la génération de bruit qui pourrait en découler.

Toujours dans le cas d'un dispositif anti-couple à rotor et stator redresseur carénés, un but de l'invention est de proposer une configuration et/ou une disposition du redresseur en fonction de la géométrie du rotor pour minimiser le bruit d'interaction, à la fois en diminuant l'énergie acoustique rayonnée et en évitant l'émergence de sons purs dans les bandes de fréquences de sensibilité maximale de l'oreille humaine.

Un autre but de l'invention est de proposer une configuration de veine carénée améliorant les performances aérodynamiques du dispositif anti-couple, que ce dernier comprenne un rotor avec ou sans stator redresseur, et que le pales du rotor soient ou non équi-réparties angulairement, pour augmenter le niveau de poussée à puissance donnée, et diminuer le bruit occasionné par l'écoulement d'air dans la veine.

De manière générale, l'invention a pour but de proposer un dispositif anti-couple à rotor caréné, et de préférence également avec stator redresseur caréné, qui convienne mieux aux divers exigences de la pratique que les dispositifs anti-couple carénés connus.

Les buts précités ainsi que d'autres sont atteints, selon l'invention, par un dispositif anti-couple pour hélicoptère, comprenant un rotor multipale à pas variable monté rotatif et sensiblement coaxial dans une veine d'écoulement d'air d'axe sensiblement transversal à l'hélicoptère et traversant une carène intégrée dans la partie arrière de l'hélicoptère, de sorte que les axes de changement de pas des pales se déplacent dans un plan de rotation sensiblement perpendiculaire à l'axe de la veine carénée, les pales du rotor ayant une répartition angulaire autour de l'axe du rotor selon une modulation azimutale irrégulière, et qui se caractérise en ce que la modulation azimutale des pales est sensiblement donnée par la loi sinusoïdale suivante :

$$\Theta n = n \times \frac{360°}{b} + \Delta \Theta \sin \left( m \times n \times \frac{360°}{b} \right)$$

où $\Theta n$ est la position angulaire de la n ième des pales du rotor comptées successivement à partir d'une origine quelconque, b est le nombre des pales du rotor, m est un nombre entier choisi de 1 à 4 et qui n'est pas premier avec le nombre b des pales du rotor, choisis de 6 à 12, et $\Delta \Theta$ est choisi supérieur ou égal à une valeur minimum $\Delta \Theta$ min qui est telle que le produit $\Delta \Theta$ min x b soit choisi dans une plage de valeur s'étendant de 1,5 à 1 radian.

L'espacement angulaire irrégulier des pales résultant de cette loi sinusoïdale assure une répartion efficace dans le spectre de fréquences de l'énergie acoustique rayonnée par l'ensemble des pales en rotation, qui constitue une source principale de bruits. L'écartement angulaire irrégulier des pales ainsi proposé a pour effet de diminuer le niveau d'énergie acoustique qui est concentrée sur les raies de fréquences b x $\Omega$ et ses multiples entiers, pour un rotor à pales équi-réparties, et de la répartir sur les fréquences adjacentes. Le spectre impulsif des rotors à pales équi-réparties se transforme en un spectre beaucoup plus riche avec un rotor selon l'invention, et l'oreille humaine ne perçoit plus un son pur strident et pénible, mais un bruit beaucoup plus neutre. Cette loi sinusoïdale de répartition angulaire des pales du rotor assure simultanément une simplicité de mise en oeuvre industrielle et une efficacité acoustique, car les paramètres m et $\Delta \Theta$ sont choisis en fonction du nombre b des pales pour à la fois assurer l'équilibre dynamique du rotor, la répartition optimale de l'énergie dans le spectre de fréquences, et garantir un écart angulaire interpale minimal, imposé par les conditions de débattement des pales en pas et de tenue structurelle au moyeu du rotor.

Cependant, lorsque l'application de la loi sinusoïdale ne permet pas de maintenir un écart angulaire interpale supérieur ou égal à l'écart minimal admissible pour les raisons précitées, la loi sinusoïdale précitée peut être dégradée pour assurer une modulation azimutale convenable. On autorise alors une variation autour de la position angulaire donnée initialement à chaque pale du rotor par la loi de répartition sinusoïdale, et la position angulaire d'au moins une pale du rotor varie au maximum de $\pm 5°$ par rapport à la position angulaire fixée par la loi sinusoïdale, pour conserver l'efficacité propre à la modulation et couvrir les contraintes précitées.

Le dispositif anti-couple peut comprendre de plus un stator redresseur caréné, fixé dans la veine en aval du rotor et comportant des aubes fixes disposées sensiblement en étoile autour de l'axe de la veine et présentant chacune un profil aérodynamique dissymétrique dont la cambrure et le calage angulaire par rapport à l'axe de la veine sont tels que les aubes redressent le flux d'air en aval du rotor sensiblement parallèlement à l'axe de la veine. Dans ce cas, les aubes du redresseur peuvent être réparties sensiblement régulièrement autour de l'axe de la veine, et, quelle que soit la modulation azimutale irrégulière des pales du rotor, le dispositif est en outre tel que tout angle entre deux pales quelconques du rotor est différent de tout angle entre deux aubes quelconques du redresseur. Ainsi, en d'autres termes, il n'y a aucun écart angulaire entre deux pales non forcément consécutives du rotor qui soit égal à un quelconque écart angulaire entre deux aubes non forcément consécutives du redresseur.

Bien entendu, on peut parvenir avantageusement à respecter cette condition géométrique en donnant aux pales du rotor une position angulaire initiale définie par la loi de répartition sinusoïdale précitée, puis, si nécessaire, en dégradant cette loi en autorisant la variation précitée autour de la position angulaire initiale, jusqu'à satisfaire la condition géométrique précitée.

En effet, lors de l'utilisation d'un redresseur en aval du rotor, il est important de minimiser le bruit résultant de l'interaction du sillage de chaque pale du rotor avec les obstacles que constituent les aubes du redresseur. En particulier, pour le rotor, on propose de briser toute corrélation d'interaction pale à pale. En effet, une telle corrélation non seulement entraîne le cumul total de l'énergie acoustique générée par l'interaction de sillage, car le déphasage d'une source d'interaction par rapport à l'autre est nul, mais, du fait de la périodicité, concentre toute cette énergie sur des bandes très étroites de fréquences, multiples les unes des autres. Il en résulte l'émission d'un son pur énergétique, que l'oreille humaine supporte mal et ce phénomène est lourdement pénalisé par les règles de certification acoustique.

La solution technique correspondant à la condition géométrique précitée, assure que deux pales quelconques du rotor ne passeront jamais simultanément en regard de deux aubes quelconques du redresseur.

On note que cette condition géométrique est la généralisation, à une disposition circonférentielle quelconque des pales du rotor et des aubes de redresseur, de la condition géométrique valable uniquement pour des agencements de pales et d'aubes équi-réparties et selon laquelle les nombres des pales du rotor et des aubes du redresseur doivent être premiers entre eux.

La diminution des nuisances acoustiques dues aux interactions entre les pales du rotor et les aubes fixes du redresseur s'obtient également, et indépendamment des lois et conditions de répartition angulaire précitées, en faisant en sorte de diminuer le niveau d'énergie acoustique émise par ces interactions, qu'il soit ou non concentré sur certaines fréquences. Pour éviter que l'interaction du sillage d'une pale quelconque du rotor sur une aube quelconque du redresseur ne se produise simultanément sur l'ensemble de l'envergure de l'aube, les aubes du redresseur sont disposées, selon l'invention, de façon non radiale. Avantageusement, elles sont chacune inclinées sur la direction radiale, de préférence d'un angle d'environ 1° à environ 25°, de l'axe de la veine vers sa périphérie, et dans le sens opposé au sens de rotation du rotor. Cette orientation est simultanément favorable à la reprise du couple, s'exerçant, en réaction à la rotation du rotor, sur un corps central sensiblement coaxial à la veine, renfermant les organes d'entraînement du rotor et les organes de commande collectives du pas des pales de ce dernier, et que les aubes du redresseur peuvent ainsi avantageusement supporter dans la veine.

Afin que les aubes remplissent dans de bonnes conditions simultanément leur fonction de support du corps central et leur fonction de redressement du flux d'air traversant la veine, il est avantageux qu'elles présentent un profil aérodynamique du type NACA 65, avec une épaisseur relative comprise entre environ 8 % et environ 12 %, un calage angulaire sur l'axe de la veine compris entre environ 2° et environ 2,5°, orienté à piquer, et une cambrure comprise entre environ 20° et environ 28°. L'épaisseur ainsi choisie est un compromis entre une épaisseur relative la plus faible possible, pour diminuer à la fois le bruit de charge et d'épaisseur du redresseur travaillant dans le sillage des pales en rotation, et une épaisseur suffisante pour assurer le maintien du corps supportant le rotor et renfermant la boîte de transmission arrière et la commande collective du pas des pales, qui sont ainsi solidarisés à l'ensemble arrière de l'hélicoptère, comportant l'extrémité de la poutre de queue et un empennage ou une dérive de l'hélicoptère, tout en étant soumis à des champs de forces statique et dynamique.

Afin de diminuer globalement l'énergie acoustique rayonnée, les aubes étant ou non inclinées sur la direction radiale, il est avantageux que les aubes du redresseur soient inclinées en flèche, du centre de la veine à sa périphérie et de l'amont vers l'aval, de préférence d'un angle d'environ 1° à environ 6°. Cette configuration, dans laquelle chaque aube de redresseur fait un angle non nul par rapport au plan de rotation des pales du rotor, en étant inclinée vers la sortie de la veine, permet d'augmenter la distance qui sépare le plan de rotation des pales de la position locale du bord d'attaque des aubes du redresseur, à la périphérie de la veine, où les aubes se raccordent à la paroi carénée de cette veine, et où la vitesse induite par le rotor dans le sillage est la plus élevée, et donc engendre une interaction plus forte sur le redresseur que vers le pied des pales.

Pour obtenir un bon compromis entre le niveau d'énergie acoustique rayonnée et l'efficacité aérodynamique du redresseur, et favoriser sa disposition dans la veine du dispositif anti-couple, et en particulier l'ancrage de ses aubes dans la paroi carénée de la veine, ainsi que pour assurer un bon positionnement du rotor dans la veine, par l'intermédiaire de la boîte de transmission arrière supportée dans celle-ci par les aubes, l'espacement, selon l'axe de la veine, entre le plan de rotation du rotor et le bord d'attaque des aubes du redresseur, à la périphérie de la veine, est avantageusement une distance comprise entre 1,3c et 2,5 c, où c est la corde des pales du rotor, mesurée au niveau du début de la partie courante profilée de la pale.

De plus, pour réduire les interférences entre le rotor et un bras de transmission, transmettant une puissance d'entraînement au rotor, et traversant la veine jusqu'à la boîte de transmission arrière, ce bras est avantageusement disposé dans la veine sensiblement à la place de l'une des aubes du redresseur, dont les aubes profilées sont avantageusement en nombre au moins égal au nombre des pales du rotor diminué d'une unité.

Une diminution de la nuisance acoustique et une augmentation des performances aérodynamiques d'un dispositif anti-couple à rotor caréné peuvent également être obtenues par une configuration géométrique particulière de la veine, lorsque la modulation azimutale des pales est irrégulière ou régulière, et que le rotor est ou n'est pas associé à un redresseur.

A cet effet, selon un mode de réalisation avantageux de l'invention la veine comprend deux parties, dont l'une est un collecteur, correspondant à la partie de la veine située en amont du plan de rotation du rotor, et l'autre est un diffuseur, correspondant à la partie de la veine située en aval du plan de rotation du rotor, le collecteur comprenant un convergent d'entrée, délimité par une paroi annulaire convexe vers l'amont et arrondie avec un rayon Rc constant, et qui se prolonge vers le plan de rotation du rotor par une zone cylindrique d'une première longueur L1, et le diffuseur comprenant, du plan de rotation du rotor vers l'aval, une zone cylindrique d'une seconde longueur L2, prolongeant la zone cylindrique du collecteur, puis un divergent tronconique de demi-angle au sommet $\alpha$, et une sortie divergente délimitée par une paroi annulaire convexe vers l'aval, et arrondie de rayon r.

L'existence de la partie cylindrique de veine, formée par les zones cylindriques du collecteur et du diffuseur, permet d'améliorer le fonctionnement aérodynamique de chacun des profils des pales du rotor, lorsque ce dernier est monté dans la veine de sorte que ses pales tournent à l'intérieur de cette partie cylindrique, car l'écoulement dans cette partie cylindrique est axial.

Avantageusement, la position du plan de rotation du rotor dans cette partie cylindrique est définie en fonction de la corde c des pales du rotor, de leur plage de pas positif, de la distance a entre leur bord d'attaque et l'axe de changement de pas, et de la déformée maximale f de la pale, caractérisant sa rigidité en battement, de sorte que les longueurs L1 et L2 des zones cylindriques sont telles que : $L1 > a \sin (\beta \max) + f$ et $L2 < (c - a) \sin (\beta \max)$, où $\beta$ max est l'angle de pas positif maximum des pales du rotor.

En pratique, il est avantageux que les longueurs L1 et L2 des zones cylindriques respectivement du collecteur et du diffuseur soient comprises respectivement entre environ 2 % et environ 8 %, et entre environ 1 % et environ 3,5 % du diamètre de la veine mesuré dans sa partie cylindrique.

De même, que la veine comporte ou non une partie cylindrique, dès lors qu'elle comporte un collecteur à convergent d'entrée délimité par une paroi annulaire convexe et arrondie avec un rayon Rc constant, ce rayon est d'environ 8 % du diamètre de la veine mesuré à son col, dans sa section la plus resserrée.

Pour augmenter la poussée à puissance donnée, ou diminuer le bruit en diminuant la charge sur les pales du rotor, à poussée globale fixée, l'angle de diffusion du diffuseur, ou demi-angle $\alpha$ de son divergent tronconique, est de préférence choisi entre environ 5° et environ 20°.

Afin de réduire la trainée d'un dispositif anti-couple à rotor caréné en vol d'avancement, sans dégrader la poussée fournie par ce dispositif anti-couple, en particulier en vol stationnaire, la demanderesse a réalisé sur ses hélicoptères des modèles AS365 N1, commercialisés depuis 1985, une paroi annulaire de la sortie divergente du diffuseur ayant un premier rayon constant r1 sur un arc de cercle s'étendant vers l'avant de l'hélicoptère, un second rayon constant r2, supérieur à r1, sur un arc de cercle s'étendant vers l'arrière de l'hélicoptère, et deux zones à rayon évolutif entre r1 et r2 raccordant les zones de rayons constants, symétriquement de part et d'autre d'un axe longitudinal de l'hélicoptère. Selon l'invention, de préférence, r1 est inférieur à environ 1,6 % du diamètre de la veine, tandis que r2 est compris entre 4,3 % du diamètre de la veine et le rayon Rc choisi pour le convergent du collecteur, et la zone avant de rayon constant r1 s'étend sur un arc de cercle correspondant à un angle au centre d'au moins 210°, tandis que la zone arrière, de rayon constant r2, s'étend sur un arc de cercle correspondant à un angle au centre de 90°, symétriquement au-dessus et au-dessous de l'axe longitudinal de l'hélicoptère.

Comme dans les réalisations antérieures de dispositif anti-couple à rotor caréné, la veine peut être ménagée dans une carène intégrée dans une partie arrière d'hélicoptère comprenant l'extrémité arrière d'une poutre de queue et un empennage à au moins une dérive, l'empennage pouvant être bi-dérive et d'un type compris parmi les empennages cruciformes, en T ou en V au-dessus de la veine, et au moins une dérive de l'empennage pouvant comporter un volet de dérive braquable. De plus, l'axe de la veine peut éventuellement être incliné sur la direction horizontale de sorte que la poussée du rotor caréné produise une composante de portance sur l'hélicoptère.

D'autres avantages et caractéristiques de l'invention découleront de la description donnée ci-dessous, à titre non limitatif, d'exemples de réalisation décrits en référence aux dessins annexés sur lesquels :

-       la figure 1 est une vue en perspective de 3/4 arrière d'un dispositif anti-couple caréné, avec rotor et stator redresseur disposés dans une veine traversant une carène à l'extrémité arrière de la poutre de queue et à la base de l'empennage d'un hélicoptère, le rotor étant représenté sorti de la veine avec arrachement partiel, pour plus de clarté,
-       la figure 2 est une vue schématique en élévation latérale du rotor de la figure 1 avec une modulation azimutale irrégulière des pales,
-       la figure 3 est un diagramme illustrant le fonctionnement du rotor et du stator redresseur de la figure 1,
-       la figure 4 est une vue partielle en élévation latérale d'un exemple particulier de réalisation du dispositif de la figure 1,
-       la figure 5 correspond sensiblement à une demi-coupe axiale du dispositif anti-couple de la figure 1,
-       la figure 6 représente une demi-coupe axiale de la veine des dispositifs des figures 1, 4 et 5, et
-       la figure 7 représente schématiquement, en élévation latérale, la sortie du diffuseur de la veine et ses parties ayant des rayons différents.

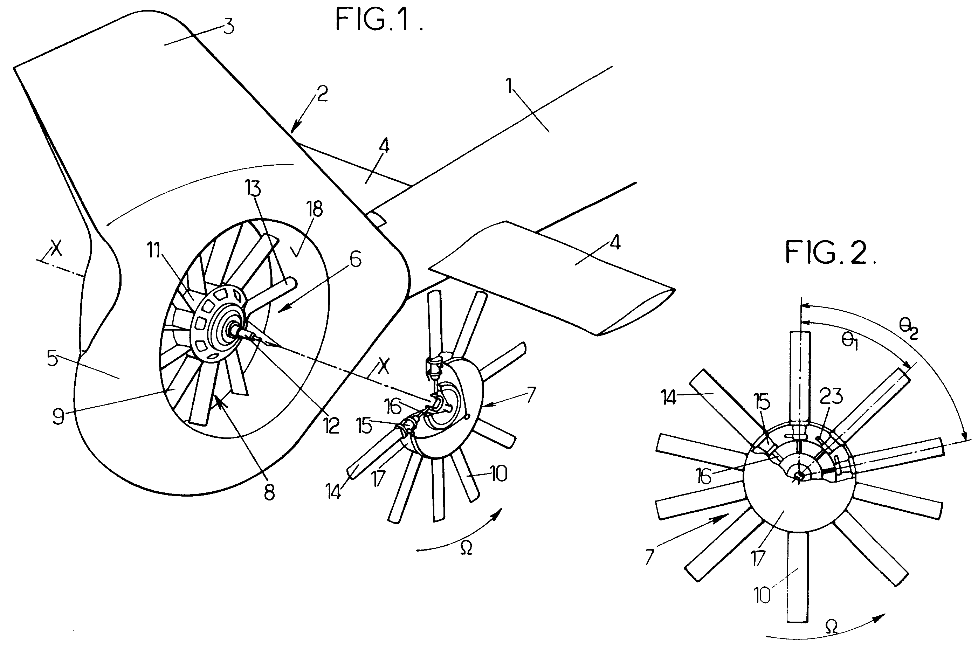

La poutre de queue 1, montrée sur la figure 1, d'un hélicoptère dont le fuselage et l'unique rotor principal ne sont pas représentés, supporte, à son extrémité arrière, un empennage 2, dont la partie supérieure est aménagée en dérive verticale 3, pour aider au contrôle en lacet, et, à l'avant de l'empennage 2, une dérive horizontale à deux plans 4 s'étendant de part et d'autre de la poutre 1, pour aider au contrôle en tangage de l'hélicoptère.

La base de l'empennage 2 est agencée en carène 5, traversée transversalement par une veine 6 d'écoulement d'air d'un dispositif anti-couple caréné comprenant également un rotor 7 multipale à pas variable, monté rotatif et sensiblement coaxial dans la veine 6, ainsi qu'un stator redresseur 8, fixé dans la veine 6 en aval du rotor 7, par rapport au sens d'écoulement du flux d'air traversant la veine 6, et comportant des aubes fixes 9 disposées sensiblement en étoile autour de l'axe X-X de la veine 6.

Ce dispositif anti-couple, qui assure l'essentiel du contrôle en lacet en vol stationnaire ou à basse vitesse,est complété par la dérive verticale 3 et la dérive horizontale 4 pour aider au contrôle en lacet et en tangage de l'hélicoptère, en déplacement à grande vitesse. Ces mêmes fonctions peuvent être remplies par une dérive en V au-dessus de la carène 5, ou par un empennage cruciforme, la dérive 4 étant montée sensiblement à mi-hauteur sur la dérive verticale 3, ou encore à empennage en T, la dérive 4 étant montée à l'extrémité supérieure de la dérive 3.

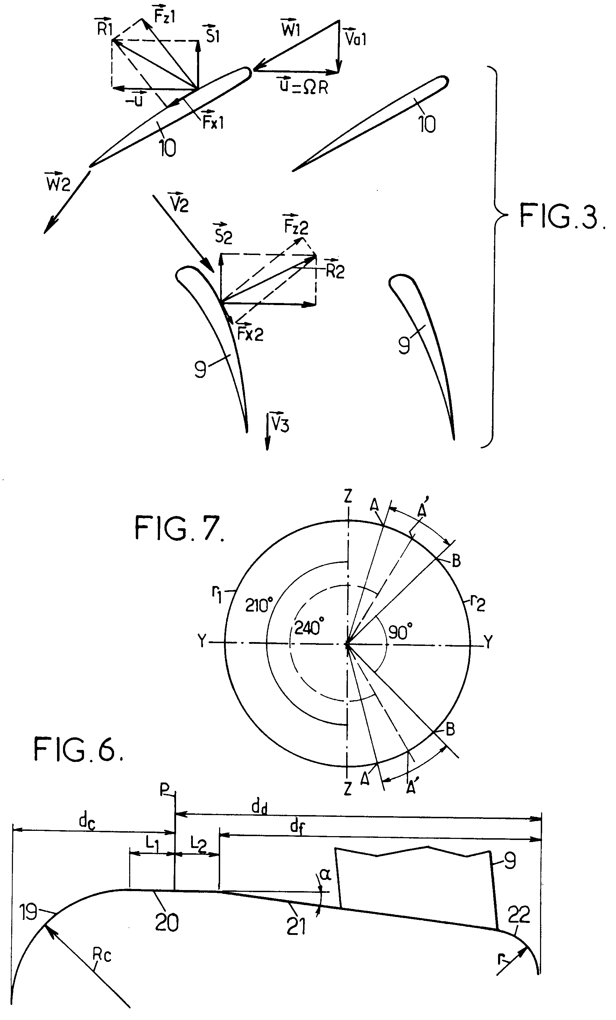

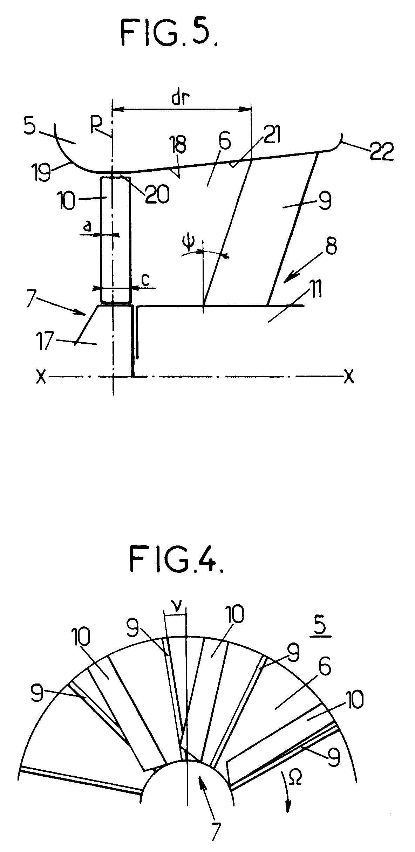

La veine 6 présente, autour de son axe X-X, sensiblement transversal à l'axe longitudinal de l'hélicoptère, une forme sensiblement de révolution, décrite ci-après en référence à la figure 6, et comprenant une entrée convergente 19 prolongée, vers la sortie d'air, par une partie cylindrique 20 elle-même prolongée jusqu'à la sortie par un divergent 21-22. Le rotor 7 est monté dans la veine 6 du côté de son entrée et de sorte que ses pales 10 tournent dans la partie cylindrique 20 de la veine 6, les axes de changement de pas des pales 10 définissant un plan P de rotation du rotor, dans lequel ils se déplacent et qui est sensiblement perpendiculaire à l'axe X-X de la veine carénée 6. Le rotor 7 est monté et entraîné en rotation sur la boîte de transmission arrière dans le corps central 11, de forme externe sensiblement cylindrique et coaxiale à la veine 6, et solidaire de la structure de l'empennage 2 par l'intermédiaire des aubes 9 du redresseur 8, qui maintiennent le corps 11 au centre de la veine 6 et du côté de sa sortie par rapport au rotor 7.

De façon connue, la boîte de transmission arrière dans le corps 11 renferme un mécanisme d'entraînement en rotation du rotor 7 par un arbre moteur 12, lui-même entraîné à partir d'un arbre de transmission traversant un bras 13 et relié à une sortie annexe de la boîte de transmission principale de l'hélicoptère, une partie du bras 13 étant disposée dans la veine 6 à la place sensiblement de l'une des aubes 9 du redresseur 8.

Ainsi, la rotation du rotor 7 dans la veine 6 créé un écoulement d'air guidé, qui engendre la poussée transversale anti-couple nécessaire à l'équilibre en lacet de l'hélicoptère.

De façon également connue, pour faire varier l'amplitude de cette poussée transversale, la boîte de transmission arrière du corps 11 et le rotor 7 comprennent un dispositif de commande collective du pas des pales 10, actionné par une bielle de commande, non représentée, car on suppose que le bras 13 de la figure 1 sert de carénage à l'arbre de transmission et à la bielle de commande collective du pas.

Pour ce qui concerne la structure, la configuration et le fonctionnement de la boîte de transmission arrière, du dispositif de commande collective du pas des pales 10, ainsi que du rotor 7, on se reportera avantageusement aux brevets français FR 1 531 536 et américains US-3,594,097 et US-4,626,173 de la demanderesse. On se limite à rappeler que chaque pale 10 comporte une partie courante 14 à profil aérodynamique, un pied de pale 15 aménagé en manchon, par lequel la pale 10 est montée tourillonnante autour de son axe longitudinal de changement de pas dans au moins un palier aménagé à cet effet dans au moins une paroi annulaire d'un moyeu de rotor 17, et une partie d'emplanture 16 torsible et de préférence également flexible, qui traverse le manchon de pied de pale 15 et est retenue par son extrémité opposée au manchon 15 sur le moyeu de rotor 17, lequel est entraîné en rotation par l'arbre moteur 12 en saillie selon l'axe X-X de la veine 6 sur le corps 11 entourant la boîte de transmission arrière. Le pied 15 de chaque pale 10 présente, en saillie d'un côté de la pale 10, un levier 23 de commande de pas, relié par une biellette à un plateau de commande tournant librement avec le rotor 7 mais translatable selon l'axe de rotation du rotor 7 par la manoeuvre de la bielle de commande de pas pour commander collectivement le changement du pas des pales 10.

Les aubes 9, fixées dans la veine 6 en aval des pales 10 du rotor 7, sans toutefois sortir du divergent 21-22 de la veine 6, assurent une récupération de l'énergie de rotation de l'écoulement d'air en aval des pales 10, en redressant cet écoulement vers l'axe X-X de la veine 6 et en procurant un supplément de poussée anti-couple, comme expliqué dans le brevet français FR-2 534 222 de la demanderesse, dont la figure 5 correspond à la figure 3 de la présente demande. Sur cette figure 3, on a schématiquement représenté deux pales 10 du rotor qui tournent avec une vitesse de rotation $u = \Omega R$, en amont de deux aubes fixes 9. Cette vitesse u se combine avec la vitesse axiale d'entrée $V_{a1}$ de l'air pour donner une vitesse relative $W_1$ de l'écoulement de l'air au rotor, cette dernière vitesse établissant un champ de pression autour de chaque pale mobile 10.

Ce champ engendre alors une résultante aérodynamique $R_1$, qui peut, d'une part, se décomposer en un effort de portance $FZ_1$ et un effort de traînée $FX_1$, et d'autre part, donne lieu à une poussée axiale $S_1$ de direction orthogonale à la direction de la vitesse u de rotation du rotor, et de sens opposé à $V_{a1}$.

Suite au premier obstacle constitué par chaque pale 10 considérée, l'air sort du rotor 7 dans des conditions de vitesse différentes, et le triangle des vitesses de sortie permet de distinguer une nouvelle vitesse relative W2 au rotor, inférieure à W1, et une vitesse absolue V2 qui attaque une aube fixe 9 en correspondance.

La vitesse V2 jouant pour l'aube fixe 9 le même rôle que la vitesse W1 pour la pale mobile 10, V2 établit un champ de pression autour de chaque aube 9, et ce champ engendre une résultante aérodynamique R2, qui, d'une part, se décompose en un effort de portance FZ2 et un effort de traînée FX2, et, d'autre part, donne lieu à une poussée axiale S2, qui est une poussée additionnelle s'ajoutant à la poussée S1. En sortie des aubes 9, l'écoulement d'air est redressé et sa vitesse V3 peut être pratiquement axiale (parallèle à X-X) par le choix approprié du profil aérodynamique dissymétrique des aubes 9, et en particulier de leur cambrure et du calage angulaire par rapport à l'axe X-X de la veine 6.

Dans un dispositif anti-couple caréné, la disposition d'un stator redresseur 8 à aubes 9 fixes profilées en aval du rotor 7 dans la veine 6 permet de réaliser un dispositif anti-couple compact, équilibré et rigide, procurant, sans modification de la puissance d'entraînement du rotor 7, une poussée anti-couple accrue.

L'efficacité d'un tel dispositif anti-couple est ainsi liée :

- aux caractéristiques du rotor 7, le niveau de performances requis pour assurer le pilotage en cap de l'hélicoptère dépendant en priorité du choix du diamètre du rotor 7, et donc de la veine 6, de la vitesse périphérique des pales, de leur nombre, de leur corde et de leur profil et loi de vrillage,
- aux caractéristiques du redresseur 8, lorsqu'il existe, et notamment du nombre des aubes 9, de leur corde, de leur profil (cambrure, calage, ...),
- ainsi qu'aux caractéristiques de la veine 6.

Parallèlement, l'optimisation acoustique du dispositif anti-couple caréné est assurée en répartissant l'énergie acoustique sur tout le spectre de fréquence, par l'adoption d'une répartition angulaire irrégulière des pales 10 du rotor 7, appelée modulation azimutale ou modulation de phase, et en réduisant le niveau d'énergie acoustique émis par le dispositif anti-couple, par la réduction de la vitesse périphérique des pales 10 du rotor 7, par la réduction des interférences entre le rotor 7, d'une part, et, d'autre part, le stator redresseur 8 et le bras 13 de transmission, grâce à une configuration et une disposition particulières de ces éléments dans la veine 6, avec un écartement approprié du rotor 7.

Pour un rotor à dix pales 10, un exemple de modulation de phase ou azimutale irrégulière est représenté sur la figure 2. Le but de cette modulation de phase est de rompre la symétrie angulaire habituelle ou l'équi-répartition angulaire habituelle des pales d'un rotor, afin non pas de réduire l'énergie acoustique émise, mais de la répartir plus favorablement sur le spectre de fréquence, contrairement à ce qui est obtenu en l'absence de modulation (pales équiréparties), à savoir une concentration de l'énergie sur des fréquences particulières (b $\Omega$, 2b $\Omega$, 3b $\Omega$ .....).

La loi de modulation de phase des pales 10 du rotor 7 est une loi sinusoïdale ou voisine d'une loi sinusoïdale de type :

$$\Theta n = n \times \frac{360°}{b} + \Delta\,\Theta \sin \left(m \times n \times \frac{360°}{b}\right),$$

où $\Theta n$ est la position angulaire de la n ième des pales du rotor comptées successivement à partir d'une origine angulaire quelconque, b étant le nombre des pales du rotor, et m et $\Delta\,\Theta$ sont les paramètres de la loi sinusoïdale correspondant, pour m, à un nombre entier qui n'est pas premier avec le nombre b des pales 10 du rotor 7, tandis que $\Delta\,\Theta$ est choisi supérieur ou égal à une valeur minimum $\Delta\,\Theta$ min choisie en fonction du nombre de pales b, et qui diminue lorsque b augmente.

On comprend que

$$n \times \frac{360°}{b}$$

représente la position angulaire de la n ième pale, dans une configuration équi-répartie, alors que

$$\Delta\,\Theta \sin \left(m \times n \times \frac{360°}{b}\right)$$

correspond au terme de modulation azimutale par rapport à la configuration équi-répartie. Les paramètres m et $\Delta\,\Theta$ sont choisis en fonction du nombre b des pales 10, pour, à la fois, assurer l'équilibre dynamique du rotor 7, la répartition optimale de l'énergie dans le spectre de fréquence, et garantir un écart angulaire interpale minimal, imposé par les conditions de débattement des pales en pas et de tenue structurelle des pales 10 au moyeu 17.

Le nombre entier m est choisi de la façon suivante: il est tout d'abord choisi pour respecter l'équilibre dynamique du rotor 7. En écrivant cet équilibre, on obtient les deux équations suivantes qui sont à satisfaire :

$$\Sigma \cos \Theta n = 0 \text{ et } \Sigma \sin \Theta n = 0$$

Pour la loi de modulation sinusoïdale $\Theta n$ donnée ci-dessus, ces deux équations sont satisfaites si m et b ne sont pas des nombres premiers entre eux.

Les choix possibles pour m en fonction du nombre b des pales 10 variant de 6 à 12 sont donnés par des croix dans le tableau 1 ci-dessous.

## Tableau 1

| b<br>m | 6 | 7 | 8 | 9 | 10 | 11 | 12 |
|---|---|---|---|---|---|---|---|
| 2 | X |  | X |  | X |  | X |
| 3 | X |  |  | X |  |  | X |
| 4 | X |  | X |  | X |  | X |

En fonction des possibilités présentées dans le tableau 1, le nombre entier m est le plus petit possible et fixé de préférence à 2 ou 3 afin d'obtenir un spectre le plus dense possible, et donc une meilleure répartition d'énergie par tiers d'octave. Le paramètre m peut à la rigueur être égal à 4, mais la valeur 1 est à éviter.

Le paramètre $\Delta \Theta$ doit être choisi de la façon suivante : il est supérieur ou égal à une valeur minimum $\Delta \Theta$ min donnée par un critère acoustique pour un nombre de pales 10 du rotor 7 donné, comme indiqué dans le tableau 2 ci-dessous.

Tableau 2

| b | 6 | 8 | 9 | 10 | 12 |
|---|---|---|---|---|---|
| $\Delta \Theta$ min | 14,34° | 10,75° | 9,55° | 8,60° | 7,17° |

Ces valeurs correspondent à un même déphasage angulaire $\Delta \Phi = b \Delta \Theta$, qui intervient comme paramètre des fonctions de Bessel caractérisant les niveaux des raies spectrales d'une modulation sinusoïdale, par rapport à la raie fondamentale, comme expliqué dans l'article intitulé "Noise Reduction by Applying Modulation Principles" de Donald EWALD et al, publié dans "The Journal of the Acoustical Society of America", volume 49, Number 5 (part 1) 1971, pages 1381 à 1385. Le déphasage angulaire $\Delta \Phi = 1,5$ radian correspond à la valeur à partir de laquelle la fonction de Bessel Jo ($\Delta \Phi$) est inférieure ou égale aux fonctions de Bessel Jn ($\Delta \Phi$) où n est différent de O (voir la figure 2 de l'article précité). Ceci permet de minimiser l'émergence du fondamental en b $\Omega$ vis-à-vis des raies adjacentes, car Jo ($\Delta \Phi$) représente le coefficient de pondération sur la raie fondamentale, alors que J1 ($\Delta \Phi$) représente celui des raies adjacentes (b - 1) $\Omega$ et (b + 1) $\Omega$, qui existent s'il y a une modulation. Le déphasage angulaire $\Delta \Phi = b \Delta \Theta = 1,5$ radian est le point idéal, car le niveau de bruit sur les trois raies adjacentes b $\Omega$, (b - 1) $\Omega$ et (b + 1) $\Omega$ est identique, l'énergie concentrée sur la raie b $\Omega$ pour un rotor à pales équi-réparties est ainsi répartie sur les trois raies. Le tableau 2 donne ainsi les valeurs de $\Delta \Theta$ min en fonction de b, de sorte que b $\Delta \Theta$ min = 1,5 radian.

Ce résultat correspond à un cas idéal, pour lequel la fonction de perturbation de pression est assez uniforme, c'est-à-dire pour un rotor avec un grand nombre de pales (supérieur à 20). Dans le cas d'un rotor anti-couple 7, le nombre relativement plus faible des pales 10 rend la fonction de perturbation de pression plus impulsive. Aussi, la règle ci-dessus peut être légèrement affectée, ce qui nécessite de définir des fourchettes de variation pour adapter la règle de modulation sinusoïdale au cas spécifique d'un rotor anti-couple caréné 7. De plus, l'écartement angulaire interpale minimal admissible pour permettre le débattement des pales 10 en pas sans interférence entre elles, ainsi qu'une tenue structurelle convenable des pales 10 au moyeu 17 peut nécessiter un choix de $\Delta \Theta$ inférieur à $\Delta \Theta$ min recommandé par les critères acoustiques (tableau 2). Par exemple, pour un rotor 7 à dix pales 10, l'écartement angulaire interpale minimum est de 24°.

On peut adopter alors une loi de modulation de phase basée sur une loi sinusoïdale dégradée, pour laquelle b $\Delta \Theta$ peut être choisi dans la plage de valeur s'étendant de 1,5 radian à 1 radian et/ou adopter une variation de ± 5° autour de la position angulaire, donnée initialement par la loi de répartition sinusoïdale pour chaque pale 10 du rotor 7, pour couvrir la contrainte de l'écart angulaire interpale minimal, tout en conservant une bonne efficacité acoustique due à la modulation de phase.

On note que pour b $\Delta \Theta$ = 1 radian, le coefficient de pondération pour la raie fondamentale b $\Omega$ est de 0,8 et tombe à 0,45 pour les raies adjacentes (b ± 1) $\Omega$.

Lorsque le dispositif anti-couple comprend le redresseur 8, dont les aubes 9 sont régulièrement réparties autour de l'axe X-X de la veine 6, afin de limiter les interférences entre le rotor 7 et le stator redresseur 8, et en particulier afin d'éviter tout phénomène de pompage (excitation dynamique) entre le rotor 7 et le stator 8, la modulation de phase des pales 10 du rotor 7 est telle que tout écart angulaire entre deux pales 10 du rotor, non forcément consécutives, est différent de tout écart angulaire entre deux aubes 9 du stator 8, non forcément consécutives. Mathématiquement, cette condition peut se traduire de la façon suivante : si $\Theta_{ij}$ représente l'écart angulaire entre les pales d'ordre i et j du rotor 7, comptées successivement à partir d'une origine angulaire quelconque, c'est-à-dire l'angle défini entre les axes de changement de pas des pales i et j, et si $\Theta_{k,l}$ représente l'écart angulaire entre les aubes d'ordre k et l du redresseur 8, alors, quelles que soient les valeurs de i, j, k, l, $\Theta_{i,j}$ est différent de $\Theta_{k,l}$. De manière pratique, cette condition est considérée respectée si les différences entre les écarts angulaires respectifs des différentes pales 10 du rotor 7 et des différentes aubes 9 du redresseur 8 sont supérieures à 1° en valeur absolue, pour au moins la moitié des aubes 9 du redresseur 8, sans tenir compte du bras de transmission 13.

Si cette condition angulaire, qui empêche deux pales 10 de passer simultanément en regard de deux aubes 9, n'est pas vérifiée par le choix de la modulation en phase de type sinusoïdale la plus avantageuse mentionnée ci-dessus, les positions angulaires de certaines pales au moins doivent être modifiées en s'écartant de la loi sinusoïdale, et en adoptant une loi sinusoïdale dégradée comme mentionnée ci-dessus, c'est-à-dire, puisqu'alors $\Delta \Theta$ ne peut pas être choisi tel que b $\Delta \Theta$ = 1,5 radian, qu'on diminue b $\Delta \Theta$ progressivement de 1,5 vers 1 radian jusqu'à obtenir une valeur convenable de $\Delta \Theta$ pour respecter la condition géométrique précitée $\Theta_{i\,j}$ différent de $\Theta_{k\,l}$, sans descendre en dessous de 1 radian, et cumulativement ou alternativement on autorise une variation maximale de ± 5° autour de la position angulaire donnée initialement par la loi de répartition sinusoïdale de chaque pale 10 du rotor 7.

Si la diminution des nuisances sonores est recherchée en évitant les interactions simultanées entre deux pales 10 et deux aubes 9, avec un rotor 7 dont les pales 10 sont équi-réparties, il suffit de choisir un nombre b de pales 10 du rotor 7 qui soit premier avec le nombre des aubes 9 du redresseur 8, pour ne pas trouver un quelconque écart angulaire entre deux pales 10 non forcément consécutives qui soit égal à un quelconque écart angulaire entre deux aubes 9 non forcément consécutives.

Une diminution des nuisances acoustiques dues aux interactions entre le rotor 7 et le stator redresseur 8 est également obtenue par la diminution du niveau d'énergie acoustique émise par ces interactions, indépendamment des fréquences sur lesquelles elle est concentrée ou distribuée. Comme représenté sur la figure 4, pour éviter que l'interaction entre une pale 10 et une aube 9 ne se développe simultanément sur toute l'envergure de l'aube 9 considérée, les aubes 9 sont disposées de façon non radiale, mais inclinée chacune d'un angle $\nu$, compris entre environ 5° et environ 25°, sur la direction radiale, dans le sens opposé au sens de rotation des pales 10 en considérant l'aube 9 du centre de la veine 6 vers sa périphérie. Cette direction de l'inclinaison permet non seulement de réduire le bruit d'interaction entre les pales 10 du rotor 7 et les aubes 9 du stator 8, mais également d'assurer une meilleure reprise des efforts subis par la boîte de transmission arrière dans le corps 11, les aubes 9 travaillant en compression. En effet, l'une des fonctions du redresseur 8 étant de supporter la boîte de transmission arrière et le corps 11, les aubes 9 peuvent ainsi reprendre au mieux le couple de réaction au couple transmis au rotor 7. De plus, l'épaisseur relative des profils aérodynamiques des aubes 9 du redresseur 8 est choisie de façon à réduire au mieux l'encombrement dans la veine 6, tout en assurant une résistance mécanique suffisante pour la fonction de support du corps 11, et, en pratique, l'épaisseur relative des profils des aubes 9 est comprise entre environ 8 % et environ 12 %.

Ce choix de l'épaisseur relative est compatible avec l'utilisation, pour les aubes 9, d'un profil aérodynamique du type NACA 65, présentant un calage angulaire à piquer sur l'axe X-X de la veine 6 compris entre environ 2° et environ 2,5°, et une cambrure comprise entre environ 20° et environ 28°, ces caractéristiques de profil procurant une bonne efficacité au redresseur 8.

En outre, la réduction du bruit d'interaction entre le rotor 7 et le stator 8 devient significative à partir d'un écartement axial minimal, entre le bord d'attaque des aubes 9 du redresseur 8 et le plan P de rotation du rotor 7, défini par les axes de changement de pas des pales 10, à environ 40 % de leur corde c, cet écartement minimal étant au moins égal à 1,3 c. Mais comme le support de la boîte de transmission arrière et du corps 11 dans la veine 6 est assuré par le redresseur 8, afin d'assurer une bonne tolérance sur la position du plan P de rotation du rotor dans la veine 6, il est nécessaire de fixer le redresseur 8, la boîte de transmission arrière et le corps 11 le plus près possible du plan P du rotor 7.

Un bon compromis entre ces deux exigences contradictoires, c'est-à-dire entre une réduction de bruit et une bonne tolérance sur la position du plan P du rotor 7, est obtenu en inclinant les aubes 9 du redresseur 8 d'un angle Ψ, d'environ 2° à environ 6°, comme représenté de manière exagérée sur la figure 5. Cette inclinaison de chaque aube 9 en flèche, du centre de la veine 6 vers sa périphérie et de l'amont vers l'aval, permet d'éloigner au maximum le bord d'attaque de chaque aube 9, par rapport au plan P du rotor, en préservant un positionnement correct de l'axe de la boîte de transmission arrière et du corps 11, et donc du plan P du rotor dans la veine 6. Compte tenu de l'évolution de la charge aérodynamique entre le pied de l'aube 9, lié au corps 11, et son extrémité, plus chargée, liée à la paroi latérale ou carénage 18 de la veine 6, l'influence sur le bruit reste négligeable, malgré un rapprochement du bord d'attaque des aubes 9 en arrière du pied des pales 10. Pour ces raisons, l'espacement axial, entre le plan P de rotation du rotor 7 et le bord d'attaque des aubes 9 du redresseur 8, à la périphérie de la veine 6, est une distance dr comprise entre environ 1,3 c et environ 2,5 c, où c est la corde des pales 10 du rotor 7, choisie dans leur partie courante 14, à proximité du pied de pale 15, lorsque cette corde c n'est pas constante sur l'envergure de la partie courante 14.

En résumé, en plus de l'angle ν d'inclinaison sur la direction radiale, dans un plan perpendiculaire à l'axe X-X de la veine 6, et parallèle au plan P du rotor, chaque aube 9 est telle que son bord d'attaque est éloigné d'une distance dr, allant d'environ 1,3 c à environ 2,5 c, du plan P de rotation du rotor, à la périphérie de la veine 6, en évitant que le bord de fuite des aubes 9 pénètre dans la sortie délimitée par une lèvre arrondie de cette veine 6, et chaque aube 9 est inclinée en flèche d'un angle Ψ dans un plan perpendiculaire au plan P du rotor, vers l'aval et vers la périphérie de la veine 6, pour assurer un positionnement précis du plan P du rotor par un positionnement correct du corps 11 et de la boîte de transmission arrière. Lorsque dr est inférieur à 1,3 c, le niveau d'énergie acoustique rayonnée augmente très rapidement lorsque les aubes 9 sont rapprochées du plan de rotation P, tandis que si dr est supérieur à 2,5 c, le redresseur 8 perd de son efficacité aérodynamique.

Comme déjà dit, le bras de transmission 13 est assimilé à une aube 9 du redresseur 8 pour la détermination des positions angulaires des aubes 9 et des pales 10, mais il n'est pas profilé, et le nombre des aubes 9 profilées est choisi supérieur ou égal au nombre des pales 10 du rotor 7 moins un.

Ces pales 10 ont avantageusement un profil aérodynamique de type OAF, à épaisseur relative et cambrure évolutives selon l'envergure, l'épaisseur relative diminuant par exemple de 13,9 % à 9,5 % entre 0,4 R et R, où R est le rayon du rotor 7. De même, le vrillage du profil diminue en s'éloignant de l'axe du rotor.

Comme montré sur la figure 6, et comme déjà décrit, la paroi annulaire 18 de la veine 6 comprend, de l'amont vers l'aval, un convergent d'entrée 19, une partie cylindrique 20, dans laquelle tourne le rotor 7, comme indiqué par le plan de rotation P, et un divergent tronconique 21 se terminant par une lèvre de sortie arrondie 22. La veine 6 se subdivise en deux parties, dont un collecteur, correspondant à la partie de veine située en amont du plan de rotation P du rotor 7, et de dimension dc axiale (selon l'axe X-X de la veine 6), et un diffuseur, correspondant à la partie de veine 6 située en aval du plan du rotor P et de dimension axiale dd. Le collecteur se divise lui-même en deux zones : le convergent 19, délimité par une paroi annulaire ou lèvre d'entrée convexe vers l'amont et arrondie avec un rayon Rc constant, et une zone cylindrique de longueur L1 qui lui fait suite. Le diffuseur se divise en trois zones, dont une zone cylindrique de longueur L2, prolongeant la zone cylindrique L1 du collecteur, la zone tronconique de demi-angle au sommet α du divergent 21, et la sortie divergente délimitée par la lèvre de sortie 21, en forme de paroi annulaire convexe vers l'aval et arrondie de rayon r.

Si ϕ indique le diamètre de la veine 6 dans sa partie cylindrique 20, le rapport L1/ϕ doit être compris entre environ 0,02 et environ 0,08, pour éviter qu'une zone cylindrique L1 trop importante dégrade fortement les performances du rotor caréné. De même, une longueur de collecteur dc trop faible dégrade les performances du rotor caréné, de sorte que la longueur minimale du collecteur dc = Rc + L1 correspond à environ 10 % du diamètre de veine ϕ. Donc

$$\frac{Rc + L1}{\phi} \text{ est} > 0,10.$$

En pratique, le rayon Rc de la lèvre d'entrée 19 est déterminé de sorte que son rapport au diamètre de veine ϕ est environ de 0,08. La position du plan du rotor P dans la partie cylindrique 20 est définie en fonction de la corde c des pales 10, de leur plage de pas positif, de la distance a séparant leur bord d'attaque de leur axe de changement de pas (a = 0,4 c), et de la déformée maximale f de la pale 10, caractérisant sa rigidité en battement. L1 doit être telle que : L1 > a sin (β max) + f , où β max est l'angle de pas positif maximum. Pour éviter tout débordement de la pale 10 à l'extérieur et à l'avant de la partie cylindrique 20, on prend en compte une marge supplémentaire de 1,33 % de ϕ. La longueur L2 de la zone cylindrique du diffuseur évolue entre 1 % et 3,5 % du diamètre de veine ϕ. En pratique, elle est donnée par la formule suivante : L2 < (c - a) sin (β max) .

L'angle de diffusion α (demi-angle au sommet du divergent tronconique 21) est choisi entre environ 5° et environ 20°. La longueur df de la partie divergente du diffuseur dépend directement de l'angle de diffusion α et est inversement proportionnel à la diffusion, définie par un taux de diffusion correspondant au rapport de la surface de sortie de la veine 6 à la surface du disque du rotor 7, ce rapport de diffusion restant supérieur à 1,06.

Afin de réduire la trainée du dispositif anti-couple caréné en vol d'avancement de l'hélicoptère sans dégrader ses performances en vol stationnaire, le rayon r de la lèvre annulaire convexe 22 de sortie du diffuseur n'est pas constant sur toute la périphérie de cette lèvre. Les zones d'évolution du rayon r sont représentées sur la figure 7 montrant schématiquement la sortie du diffuseur en élévation latérale. Sur cette figure, l'axe Y-Y est l'axe avant (vers la gauche) - arrière (vers la droite) ou longitudinal de l'hélicoptère passant par l'axe X-X de la veine 6, et l'axe Z-Z est l'axe vertical coupant également l'axe X-X de la veine 6. La lèvre 2 a un petit rayon constant r1, inférieur à 1,6 % environ du diamètre $\phi$ de la veine 6, dans une zone avant s'étendant sur l'arc de cercle AA correspondant à un angle au centre de 210° et symétriquement par rapport à l'axe Y-Y. Afin de ne pas dégrader la poussée fournie par le dispositif anti-couple caréné, tout en réduisant la trainée en vol d'avancement, la lèvre 22 présente un rayon r2 > r1 et compris entre environ 4,3 % du diamètre $\phi$ de la veine et le rayon Rc choisi pour le convergent 19, dans une zone arrière s'étendant sur l'arc BB correspondant à un angle au centre de 90°, symétriquement de part et d'autre de l'axe YY. Entre ces zones avant et arrière s'étendent deux zones à rayon évolutif, entre r1 et r2, et correspondant aux arcs AB sous-tendus chacun par un angle au centre de 30°. Ces zones de rayon évolutif, nécessaires pour des contraintes de fabrication, assurent la transition entre les parties avant et arrière de la lèvre de sortie 22. En variante, la zone avant de petit rayon r1 peut s'étendre sur l'arc A'A' correspondant à un angle au centre pouvant atteindre 240°. Les zones de transition correspondant aux arcs A'B sont alors plus courtes.

Dans un exemple convenant à l'équipement d'un hélicoptère d'une masse de l'ordre de 1,5 tonne, le dispositif anti-couple est caréné dans une veine 6 de 750 mm de diamètre, avec un rotor à 8 pales métalliques ayant une partie courante 14 empennée et un manchon 15 monobloc, et telles que décrites dans US-3,594,097, le diamètre du moyeu rotor étant de 304 mm, la corde des pales de 58 mm ou 63 mm selon que la vitesse en bout de pale est de 186 m/s ou 180 m/s, la plage de pas des pales s'étendant de - 25° à + 41° à 0,7 R (R est le rayon du rotor), et le profil des pales étant un profil OAF évolutif, tel que précité, avec une loi de vrillage diminuant de 17° à 6,9° de 0,4 R à R.

Associée à un redresseur à dix aubes 9 profilées de 80 mm de corde auxquelles s'ajoute le bras de transmission 13 [dix écarts angulaires inter-aube de 30,66° et un écart angulaire de 53,4° dans lequel passe le bras 13], le rotor à huit pales 10 présente une modulation de phase des pales selon la loi sinusoïdale optimale (b $\Delta \Theta$ min = 1,5 radian) dont les paramètres sont m = 2 et $\Delta \Theta$ = 10,75°, mais pour tenir compte du redresseur 8, la loi optimale est dégradée par des variations angulaires maximales de $\pm$ 3,75°, ce qui conduit à la modulation suivante des huit pales 10 du rotor 7.

| n | 1 | 2 | 3 | 4 |
|---|---|---|---|---|
| $\Theta n$ | 55° | 92° | 128° | 180° |

| n | 5 | 6 | 7 | 8 |
|---|---|---|---|---|
| $\Theta n$ | 235° | 272° | 308° | 360° |

Par contre, associé à un redresseur à sept aubes 9 profilées plus le bras de transmission 17, le rotor à huit pales 10 présente une modulation de phase selon une loi sinusoïdale dégradée (b $\Delta \Theta$ = 1,25 radian) dont les paramètres sont m = 2 et $\Delta \Theta$ = 8,96° avec des variations angulaires maximales de $\pm$ 5°, ce qui donne la modulation suivante:

| n | 1 | 2 | 3 | 4 | 5 | 6 | 7 | 8 |
|---|---|---|---|---|---|---|---|---|
| $\Theta n$ | 56° | 93° | 131° | 180° | 236° | 273° | 311° | 360° |

L'inclinaison $\nu$ des aubes 9 sur la direction radiale passant par la base de chacune est de l'ordre de 10° et leur angle de flèche $\Psi$ vers la périphérie et vers la sortie de la veine 6 est de 4°. La distance dr séparant le plan de rotation P du rotor du bord d'attaque des aubes 9 est de 96,5 mm, soit environ 1,53 fois à 1,66 fois la corde des pales du rotor. Les aubes profilées 9 du redresseur ont un profil de type NACA 65 avec une épaisseur relative de 10 %, une cambrure de la ligne moyenne du profil de 27° et un calage à piquer de 2,5° sur l'axe X-X de la veine 6. Cette dernière a un convergent 19 dont le rayon Rc est de 60 mm, la longueur L1 de la zone cylindrique du collecteur est de 24 mm, la longueur L2 de la zone cylindrique du diffuseur est de 23 mm, l'angle de divergence $\alpha$ est de 7°, et la lèvre de sortie 22 a un rayon r1 de 10 mm sur la zone avant et un rayon r2 de 45 mm sur la zone arrière, la longueur minimale de la partie divergente du diffuseur df étant de 187 mm.

Dans un exemple convenant à l'équipement d'un hélicoptère d'une masse de 2,5 tonnes environ, le dispositif anti-couple comprend un rotor de 10 pales de 50 mm de corde, entraîné à une vitesse périphérique de 187,66 m/s (3584 tr/mn) avec un moyeu d'un diamètre de 380mm, logé dans une veine de 1 m de diamètre. Le profil des pales est un profil OAF analogue à celui de l'exemple précédent, et la plage de pas s'étend de - 25° à + 35° (à 0,7 R). Les pales, qui sont de type métallique comme dans l'exemple précédent, présentent une modulation de phase ou azimutale donnée par la loi sinusoïdale précitée mais dégradée (b $\Delta \Theta$ = 1 radian) dont les paramètres sont m = 2 et $\Delta \Theta$ = 5,73° avec des variations angulaires maximales de $\pm$ 3,4°. Le redresseur comporte dix aubes profilées d'une corde de 97 mm, auxquelles s'ajoute le bras de transmission 13. Ceci conduit à la modulation suivante :

| n | 1 | 2 | 3 | 4 | 5 |
|---|---|---|---|---|---|
| $\Theta n$ | 44,9° | 77,5° | 102,5° | 135,1° | 180° |

| n | 6 | 7 | 8 | 9 | 10 |
|---|---|---|---|---|---|
| $\Theta n$ | 224,9° | 257,5° | 282,5° | 315,1° | 360° |

L'angle de flèche $\Psi$ des aubes profilées est de 4° et leur inclinaison $\nu$ sur la direction radiale est de 7,8°. La distance dr entre le plan P du rotor et les aubes profilées 9 est d'environ 98 mm, soit environ 1,96 fois la corde c des pales. Les aubes 9 du redresseur ont un profil de type NACA 65 à 10 % d'épaisseur relative, avec une cambrure de 21° pour la ligne moyenne du profil, et un calage à piquer de 2,5°. Le rayon Rc du convergent d'entrée de la veine 6 est de 80 mm, et les longueurs L1 et L2 sont respectivement de 23 mm et 17 mm pour les zones cylindriques respectivement du collecteur et du diffuseur. L'angle de divergence $\alpha$ est de 7° et la longueur minimale df de la partie divergente de la veine est de 280 mm. Le rayon r1 de la zone avant de la lèvre 22 est de 10 mm tandis que son rayon r2 sur la zone arrière est de 60 mm.

Pour équiper un hélicoptère, d'une masse de l'ordre de 4 à 4,5 tonnes, un exemple de dispositif anti-couple peut comprendre un rotor de dix pales d'une corde de 94 mm, entraîné avec une vitesse périphérique en bout de pale de 180 m/s (3125 tr/mn) dans une veine de 1100 mm de diamètre, le rayon du rotor étant de 225 mm. Comme dans les exemples précédents, l'axe de changement de pas des pales est à 40 % de leur corde c, et leur profil est un profil OAF évolutif, avec la même loi de variation de l'épaisseur relative, mais une loi de vrillage qui diminue de 7,25° à - 1,2° entre 0,4 R et R. Le redresseur comprend soit 13 aubes, dont 12 profilées avec une corde de 80 mm auxquelles s'ajoute le bras de transmission, soit 17 aubes dont 16 profilées avec une corde de 66 mm et auxquelles s'ajoute le bras de transmission. Le profil des aubes profilées est un profil de type NACA 65 avec 10 % d'épaisseur relative, une cambrure de 23° et un calage à piquer de 2,2°. L'angle $\Psi$ d'inclinaison en flèche des aubes profilées est de 3° et leur angle $\nu$ d'inclinaison sur la direction radiale est de 11,2°. La distance dr entre le plan P du rotor et le bord d'attaque des aubes est de 1,65 c à 1,7 c, et l'application de la loi sinusoïdale dégradée mentionnée ci-dessus, pour obtenir une modulation de phase conduisant à ce qu'aucun angle entre deux pales quelconques soit égal à tout angle entre deux aubes quelconques, conduit à la répartition angulaire des 10 pales du rotor donnée dans le tableau 3 ci-après (voir page suivante), selon que le stator redresseur comprend 13 ou 17 aubes.

Tableau 3

| n | Θn stator : 13 | Θn stator : 17 |
|---|---|---|
| 1 | 45,7° | 33,5° |
| 2 | 77° | 77° |
| 3 | 103° | 120,5° |
| 4 | 134,3° | 154° |
| 5 | 180° | 180° |
| 6 | 225,7° | 213,5° |
| 7 | 257° | 257° |
| 8 | 283° | 300,5° |
| 9 | 314,3° | 334° |
| 10 | 360° | 360° |

La figure 2 représente le rotor ayant la répartition angulaire indiquée dans le tableau 3 ci-dessus pour un stator redresseur à 13 aubes.

**Revendications**

1. Dispositif anti-couple pour hélicoptère, comprenant un rotor (7) multipale à pas variable monté rotatif et sensiblement coaxial dans une veine (6) d'écoulement d'air d'axe (X-X) sensiblement transversal à l'hélicoptère et traversant une carène (5) intégrée dans la partie arrière (1-2) de l'hélicoptère, de sorte que les axes de changement de pas des pales (10) se déplacent dans un plan (P) de rotation sensiblement perpendiculaire à l'axe (X-X) de la veine carénée (6), les pales (10) du rotor (7) ayant une répartition angulaire autour de l'axe du rotor (7) selon une modulation azimutale irrégulière,
   caractérisé en ce que la modulation azimutale des pales (10) est sensiblement donnée par la loi sinusoïdale suivante :

$$\Theta n = n \times \frac{360°}{b} + \Delta \Theta \sin (m \times n \times \frac{360°}{b})$$

où Θn est la position angulaire de la n ième des pales (10) comptées successivement à partir d'une origine quelconque, b est le nombre des pales (10), m est un nombre entier, choisi de 1 à 4, qui n'est pas premier avec le nombre b des pales (10), choisi de 6 à 12, et Δ Θ est choisi supérieur ou égal à une valeur minimum Δ Θ min, qui est telle que le produit Δ Θ min x b est choisi dans une plage de valeurs s'étendant de 1,5 radian à 1 radian.

2. Dispositif anti-couple selon la revendication 1, caractérisé en ce que la modulation azimutale correspond sensiblement à une loi sinusoïdale dégradée, pour laquelle la position angulaire d'au moins une pale (10) du rotor (7) varie au maximum de ± 5° par rapport à la position angulaire fixée par la loi sinusoïdale.

3. Dispositif anti-couple selon l'une des revendications 1 et 2, caractérisé en ce qu'il comprend de plus un stator redresseur (8) fixé dans la veine (6) en aval du rotor (7) et comportant des aubes (9) fixes disposées sensiblement en étoile autour de l'axe (X-X) de la veine (6) et présentant chacune un profil aérodynamique dissymétrique dont la cambrure et le calage angulaire par rapport à l'axe de la veine (6) sont tels que les aubes (9) redressent le flux d'air en aval du rotor (7) sensiblement parallèlement à l'axe de la veine (6).

4. Dispositif anti-couple selon la revendication 3, caractérisé en ce les aubes (9) du redresseur (8) sont réparties sensiblement régulièrement autour de l'axe (X-X) de la veine (6), et tout angle entre deux pales (10) quelconques du rotor (7) est différent de tout angle entre deux aubes (9) quelconques du redresseur (8).

5. Dispositif anti-couple selon l'une quelconque des revendications 3 et 4, caractérisé en ce que les aubes (9) du redresseur (8) sont chacune inclinées sur la direction radiale, de l'axe (X-X) de la veine (6) vers sa périphérie, et dans le sens opposé au sens de rotation du rotor (7).

6.  Dispositif anti-couple selon l'une quelconque des revendications 3 à 5, caractérisé en ce que les aubes (9) du redresseur (8) sont inclinées en flèche, du centre de la veine (6) vers sa périphérie et de l'amont vers l'aval de la veine (6).

7.  Dispositif anti-couple selon l'une quelconque des revendications 3 à 6, caractérisé en ce que l'espacement, selon l'axe (X-X) de la veine (6), entre le plan (P) de rotation du rotor (7) et le bord d'attaque des aubes (9) du redresseur (8), à la périphérie de la veine (6), est une distance (dr) comprise entre 1,3 c et 2,5 c, où c est la corde des pales (10) du rotor (7).

8.  Dispositif anti-couple selon l'une quelconque des revendications 3 à 7, caractérisé en ce que les aubes (9) du redresseur (8) supportent dans la veine (6) un corps (11) sensiblement coaxial à la veine (6), renfermant des organes d'entraînement du rotor (7) et des organes de commande collective du pas des pales (10) du rotor, lequel est monté en rotation sur le corps (11).

9.  Dispositif anti-couple selon l'une quelconque des revendications 3 à 8, caractérisé en ce que les aubes (9) du redresseur (8) ont un profil aérodynamique du type NACA 65, avec une épaisseur relative comprise entre environ 8 % et environ 12 %, un calage angulaire à piquer sur l'axe (X-X) de la veine (6) compris entre environ 2° et environ 2,5°, et une cambrure comprise entre environ 20° et environ 28°.

10. Dispositif anti-couple selon l'une quelconque des revendications 3 à 9, caractérisé en ce qu'un bras de transmission (13), transmettant une puissance d'entraînement au rotor (7), est disposé dans la veine (6) sensiblement à la place de l'une des aubes (9) du redresseur (8), dont les aubes profilées (9) sont en nombre au moins égal au nombre des pales (10) du rotor (7) diminué d'une unité.

11. Dispositif anti-couple selon l'une quelconque des revendications 1 à 10, caractérisé en ce que les pales (10) du rotor (7) ont un profil aérodynamique de type OAF, à épaisseur relative et cambrure évolutives selon l'envergure, l'épaisseur relative diminuant d'environ 13,9 % à environ 9,5 %, et le vrillage diminuant d'environ 17° à environ 6,9° ou d'environ 7,25° à environ - 1,2°, entre 0,4 R et R, où R est le rayon du rotor (7).

12. Dispositif anti-couple selon l'une quelconque des revendications 1 à 11, caractérisé en ce que la veine (6) comprend deux parties, dont l'une est un collecteur (dc), correspondant à la partie de la veine (6) située en amont du plan (P) de rotation du rotor, et l'autre est un diffuseur (dd), correspondant à la partie de la veine (6) située en aval du plan (P) de rotation du rotor, le collecteur comprenant un convergent (19) d'entrée, délimité par une paroi annulaire convexe vers l'amont et arrondie avec un rayon (Rc) constant, et qui se prolonge vers le plan (P) de rotation du rotor par une zone cylindrique d'une première longueur (L1), et le diffuseur comprenant, du plan (P) de rotation du rotor vers l'aval, une zone cylindrique d'une seconde longueur (L2), prolongeant la zone cylindrique du collecteur, puis un divergent (21) tronconique de demi-angle au sommet $\alpha$, et une sortie divergente (22) délimitée par une paroi annulaire convexe vers l'aval, et arrondie de rayon r.

13. Dispositif anti-couple selon la revendication 12, caractérisé en ce que la position du plan (P) de rotation du rotor dans la partie cylindrique (20) de veine (6) formée par les zones cylindriques du collecteur et du diffuseur est définie en fonction de la corde (c) des pales du rotor, de leur plage de pas positif, de la distance (a) entre leur bord d'attaque et l'axe de changement de pas, et de la déformée maximale (f) de la pale, caractérisant sa rigidité en battement, de sorte que les longueurs L1 et L2 des zones cylindriques sont telles que :

$$L1 > a \sin (\beta \max) + f \text{ et } L2 < (c - a) \sin (\beta \max),$$

où $\beta$ max est l'angle de pas positif maximum des pales (10) du rotor (7).

14. Dispositif anti-couple selon l'une quelconque des revendications 12 et 13, caractérisé en ce que la longueur (L1) de la zone cylindrique du collecteur est comprise entre environ 2 % et environ 8 % du diamètre ($\varnothing$) de la veine (6) mesuré dans sa partie cylindrique (20), le rayon constant (Rc) du convergent d'entrée (19) du collecteur est d'environ 8 % du diamètre ($\varnothing$) de la veine (6), et la longueur (L2) de la zone cylindrique du diffuseur évolue entre environ 1 % et environ 3,5 % du diamètre ($\varnothing$) de la veine (6).

**EP 0 680 871 B1**

**15.** Dispositif anti-couple selon l'une quelconque des revendications 12 à 14, caractérisé en ce que le demi-angle au sommet ($\alpha$) du divergent (21) tronconique est choisi entre environ 5° et environ 20°.

**16.** Dispositif anti-couple selon l'une quelconque des revendications 12 à 15, caractérisé en ce que la paroi annulaire de la sortie divergente (22) du diffuseur a un premier rayon constant (r1), inférieur à environ 1,6 % du diamètre ($\varnothing$) de la veine (6), sur un arc de cercle (AA) s'étendant vers l'avant de l'hélicoptère, un second rayon constant (r2), compris entre environ 4,3 % du diamètre ($\varnothing$) de la veine (6) et le rayon (Rc) choisi pour le convergent (19) du collecteur, sur un arc de cercle (BB) s'étendant vers l'arrière de l'hélicoptère, et deux zones (AB) à rayon évolutif (entre r1 et r2) raccordant les zones de rayons constants (r1 et r2), symétriquement de part et d'autre d'un axe longitudinal (YY) de l'hélicoptère.

**17.** Dispositif anti-couple selon la revendication 16, caractérisé en ce que la zone avant de rayon constant (r1) s'étend sur un arc de cercle (AA) correspondant à un angle au centre d'au moins 210°, et la zone arrière de rayon constant (r2) s'étend sur un arc de cercle (BB) correspondant à un angle au centre de 90°, symétriquement au-dessus et au-dessous dudit axe longitudinal (YY) de l'hélicoptère.

**18.** Dispositif anti-couple selon l'une quelconque des revendications précédentes, caractérisé en ce que la veine (6) est ménagée dans une carène (5) intégrée dans une partie arrière d'hélicoptère comprenant l'extrémité arrière d'une poutre de queue (1) et un empennage (2) à au moins une dérive (3).

**19.** Dispositif anti-couple selon la revendication 18, caractérisé en ce que l'empennage (2) est bi-dérive, d'un type compris parmi les empennages cruciformes, en T ou en V au-dessus de la veine (6).

**20.** Dispositif anti-couple selon l'une des revendications 18 et 19, caractérisé en ce qu'au moins une dérive de l'empennage comporte un volet de dérive braquable.

**Claims**

**1.** Counter-torque device for a helicopter, comprising a variable-pitch multi-blade rotor (7) mounted so that it can rotate and substantially coaxially in a duct (6) for a flow of air of axis (X-X) substantially transverse to the helicopter and passing through a fairing (5) incorporated into the tail part (1-2) of the helicopter, so that the pitch change axes of the blades (10) move in a plane (P) of rotation substantially perpendicular to the axis (X-X) of the fairing duct (6), the blades (10) of the rotor (7) having an angular distribution about the axis of the rotor (7) with an uneven azimuth modulation,
characterized in that the azimuth modulation of the blades (10) is substantially given by the following sinusoidal law:

$$\Theta n = n \times \frac{360°}{b} + \Delta \Theta \sin \left(m \times n \times \frac{360°}{b}\right)$$

where $\Theta n$ is the angular position of the nth of the blades (10) counted in series from an arbitrary origin, b is the number of blades (10), m is a whole number chosen from 1 to 4, which is not prime with the number b of blades (10), chosen from 6 to 12, and $\Delta \Theta$ is chosen to be greater than or equal to a minimum value $\Delta \Theta$ min, which is such that the product $\Delta \Theta$ min $\times$ b is chosen within a range of values extending from 1.5 radian to 1 radian.

**2.** Counter-torque device according to Claim 1, characterized in that the azimuth modulation corresponds substantially to a distorted sinusoidal law, for which the angular position of at least one blade (10) of the rotor (7) varies by a maximum of $\pm$ 5° with respect to the angular position fixed by the sinusoidal law.

**3.** Counter-torque device according to one of Claims 1 and 2, characterized in that it additionally comprises a flow-straightening stator (8) fixed into the duct (6) downstream of the rotor (7) and including stationary vanes (9) located substantially in a star configuration about the axis (X-X) of the duct (6) and each exhibiting an asymmetric aerodynamic profile, of which the camber and the angular setting with respect to the axis of the duct (6) are such that the vanes (9) straighten out the airflow downstream of the rotor (7) substantially parallel to the axis of the duct (6).

**4.** Counter-torque device according to Claim 3, characterized in that the vanes (9) of the flow-straightener (8) are distributed substantially evenly about the axis (X-X) of the duct (6), and any angle between two arbitrary blades (10) of the rotor (7) is different from any angle between two arbitrary vanes (9) of the flow-straightener (8).

16

5. Counter-torque device according to any one of Claims 3 and 4, characterized in that the vanes (9) of the flow-straightener (8) are each inclined to the radial direction, from the axis (X-X) of the duct (6) towards its periphery, and in the opposite direction from the direction of rotation of the rotor (7).

6. Counter-torque device according to any one of Claims 3 to 5, characterized in that the vanes (9) of the flow-straightener (8) are inclined at a slant, from the centre of the duct (6) to its periphery and from upstream to downstream of the duct (6).

7. Counter-torque device according to any one of Claims 3 to 6, characterized in that the spacing, along the axis (X-X) of the duct (6), between the plane (P) of rotation of the rotor (7) and the leading edge of the vanes (9) of the flow-straightener (8), at the periphery of the duct (6), is a distance (dr) lying between 1.3 c and 2.5 c, where c is the chord of the blades (10) of the rotor (7).

8. Counter-torque device according to any one of Claims 3 to 7, characterized in that the vanes (9) of the flow-straightener (8) support inside the duct (6) a body (11) which is substantially coaxial with the duct (6), containing members for driving the rotor (7) and members for collectively controlling the pitch of the blades (10) of the rotor, which is mounted so that it can rotate on the body (11).

9. Counter-torque device according to any one of Claims 3 to 8, characterized in that the vanes (9) of the flow-straightener (8) have an aerodynamic profile of the NACA 65 type, with a relative thickness lying between approximately 8% and approximately 12%, an angle of attack setting to the axis (X-X) of the duct (6) which is negative and lies between approximately 2° and approximately 2.5°, and a camber lying between approximately 20° and approximately 28°.

10. Counter-torque device according to any one of Claims 3 to 9, characterized in that a transmission arm (13), transmitting a driving power to the rotor (7), is located inside the duct (6) substantially at the location of one of the vanes (9) of the flow-straightener (8), the profiled vanes (9) of which are a number at least equal to the number of the blades (10) of the rotor (7), decreased by one.

11. Counter-torque device according to any one of Claims 1 to 10, characterized in that the blades (10) of the rotor (7) have an aerodynamic profile of OAF type, with a relative thickness and camber which are progressive depending upon the span, the relative thickness decreasing from approximately 13.9% to approximately 9.5%, and the twist decreasing from approximately 17° to approximately 6.9° or from approximately 7.25° to approximately -1.2°, between 0.4 R and R, where R is the radius of the rotor (7).

12. Counter-torque device according to any one of Claims 1 to 11, characterized in that the duct (6) comprises two parts, one of which is a collector (dc), corresponding to that part of the duct (6) which is situated upstream of the plane (P) of rotation of the rotor, and the other of which is a diffuser (dd) corresponding to that part of the duct (6) which is situated downstream of the plane (P) of rotation of the rotor, the collector comprising a convergent inlet nozzle (19), delimited by an annular wall which is convex towards the upstream end and rounded with a constant radius (Rc), and which is extended towards the plane (P) of rotation of the rotor by a cylindrical zone of a first length (L1), and the diffuser comprising, from the plane (P) of rotation of the rotor towards the downstream end, a cylindrical zone of a second length (L2), extending the cylindrical zone of the collector, then a frustoconical divergent nozzle (21) of vertex half-angle $\alpha$, and a divergent outlet (22) delimited by an annular wall which is convex towards the downstream end and rounded with radius r.

13. Counter-torque device according to Claim 12, characterized in that the position of the plane (P) of rotation of the rotor in the cylindrical part (20) of the duct (6), which part is formed by the cylindrical zones of the collector and of the diffuser is defined as a function of the chord (c) of the blades of the rotor, of their positive pitch range, of the distance (a) between their leading edge and the pitch change axis, and the maximum deformation (f) of the blade, characterizing its rigidity in flap, so that the lengths L1 and L2 of the cylindrical zones are such that:

$$L1 > a \sin (\beta \max) + f \text{ and } L2 < (c - a) \sin (\beta \max),$$

where $\beta$ max is the maximum positive pitch angle of the blades (10) of the rotor (7).

14. Counter-torque device according to any one of Claims 12 and 13, characterized in that the length (L1) of the cylindrical zone of the collector lies between approximately 2% and approximately 8% of the diameter ($\varnothing$) of the duct

(6) measured in its cylindrical part (20), the constant radius (Rc) of the inlet convergent nozzle (19) of the collector is approximately 8% of the diameter ($\varnothing$) of the duct (6) and the length (L2) of the cylindrical zone of the diffuser progresses between approximately 1% and approximately 3.5% of the diameter ($\varnothing$) of the duct (6).

15. Counter-torque device according to any one of Claims 12 to 14, characterized in that the vertex half-angle ($\alpha$) of the frustoconical divergent nozzle (21) is chosen between approximately 5° and approximately 20°.

16. Counter-torque device according to any one of Claims 12 to 14, characterized in that the annular wall of the divergent outlet nozzle (22) of the diffuser has a first constant radius (r1) less than approximately 1.6% of the diameter ($\varnothing$) of the duct (6), over a circular arc (AA) extending towards the front of the helicopter, a second constant radius (r2), lying between approximately 4.3% of the diameter ($\varnothing$) of the duct (6) and the radius (Rc) chosen for the convergent nozzle (19) of the collector, over a circular arc (BB) extending towards the rear of the helicopter, and two zones (AB) with progressive radius (progressing between r1 and r2) joining together the zones of constant radius (r1 and r2) symmetrically on either side of a longitudinal axis (YY) of the helicopter.

17. Counter-torque device according to Claim 16, characterized in that the front zone of constant radius (r1) extends over a circular arc (AA) corresponding to a subtended angle of at least 210°, and the rear zone of constant radius (r2) extends over a circular arc (BB) corresponding to a subtended angle of 90°, symmetrically above and below the said longitudinal axis (YY) of the helicopter.

18. Counter-torque device according to any one of the preceding claims, characterized in that the duct (6) is formed in a fairing (5) incorporated into a helicopter tail part comprising the rear end of a tail boom (1) and an empennage (2) with at least one stabilizer (3).

19. Counter-torque device according to Claim 18, characterized in that the empennage (2) has two stabilizers, of a type lying among cross-shaped, T-shaped or V-shaped empennages above the duct (6).

20. Counter-torque device according to one of Claims 18 and 19, characterized in that at least one stabilizer of the empennage includes a deflectable stabilizer flap.

**Patentansprüche**

1. Gegendrehmomentvorrichtung für einen Hubschrauber, die einen mit variablem Anstellwinkel ausgelegten Mehrblatt-Rotor (7) aufweist, der rotierend und im wesentlichen koaxial in einem Luftströmungskanal (6) mit einer Achse (X-X) angebracht ist, die zum Hubschrauber im wesentlichen quer verläuft und einen in die Heckpartie (1-2) des Hubschraubers integrierten Tragkörper (5) durchquert, so daß sich die Achsen zur Änderung des Anstellwinkels der Blätter (10) in einer zur Achse (X-X) des stromlinienförmig ausgebildeten Kanals (6) im wesentlichen senkrecht verlaufenden Rotationsebene (P) bewegen, wobei die Blätter (10) des Rotors (7) eine Winkelverteilung um die Achse des Rotors (7) herum entsprechend einer unregelmäßigen azimutalen Modulation haben, **dadurch gekennzeichnet**, daß die azimutale Modulation der Blätter (10) im wesentlichen durch folgendes sinusoidales Gesetz gegeben ist:

$$\Theta n = n \times \frac{360°}{b} + \Delta\Theta \, \sin\!\left(m \times n \times \frac{360°}{b}\right),$$

worin $\Theta n$ die Winkelposition des n-ten der ausgehend von einem beliebigen Ursprung gezählten Blätter (10) ist, b die Anzahl der Blätter (10) ist, m eine von 1 bis 4 gewählte ganze Zahl ist, die einen gemeinsamen Teiler mit der von 6 bis 12 gewählten Anzahl b der Blätter (10) hat, und $\Delta\Theta$ größer oder gleich einem minimalen Wert $\Delta\Theta$min gewählt ist, der so beschaffen ist, daß das Produkt $\Delta\Theta$min $\times$ b in einem Bereich von Werten gewählt wird, der sich zwischen 1,5 Radian und 1 Radian erstreckt.

2. Gegendrehmomentvorrichtung nach Anspruch 1, **dadurch gekennzeichnet**, daß die azimutale Modulation im wesentlichen einem verschlechterten sinusoidalen Gesetz entspricht, für welches die Winkelposition wenigstens eines Blattes (10) des Rotors (7) maximal um $\pm5°$ in bezug auf die durch das sinusoidale Gesetz feststehende Winkelposition variiert.

3. Gegendrehmomentvorrichtung nach einem der Ansprüche 1 und 2, **dadurch gekennzeichnet**, daß sie außerdem einen Leiteinrichtungs-Stator (8) enthält, der im Kanal (6) strömungsabwärts des Rotors (7) befestigt ist und feststehende Schaufeln (9) aufweist, die im wesentlichen sternförmig um die Achse (X-X) des Kanals (6) angeordnet sind und jeweils ein unsymmetrisches aerodynamisches Profil aufweisen, wobei die Wölbung und Winkelanstellung in bezug auf die Achse des Kanals (6) so sind, daß die Schaufeln (9) den Luftstrom strömungsabwärts des Rotors (7) im wesentlichen parallel zur Achse des Kanals (6) leiten.

4. Gegendrehmomentvorrichtung nach Anspruch 3, **dadurch gekennzeichnet**, daß die Schaufeln (9) der Leiteinrichtung (8) um die Achse (X-X) des Kanals (6) herum im wesentlichen regelmäßig verteilt sind und jeder Winkel zwischen zwei beliebigen Blättern (10) des Rotors (7) gegenüber jedem Winkel zwischen zwei beliebigen Schaufeln (9) der Leiteinrichtung (8) verschieden ist.

5. Gegendrehmomentvorrichtung nach einem der Ansprüche 3 und 4, **dadurch gekennzeichnet**, daß die Schaufeln (9) der Leiteinrichtung (8) jeweils gegenüber der radialen Richtung von der Achse (X-X) des Kanals (6) zu dessen Rand hin geneigt sind und zwar in entgegengesetzter Richtung zum Drehsinn des Rotors (7).

6. Gegendrehmomentvorrichtung nach einem der Ansprüche 3 bis 5, **dadurch gekennzeichnet**, daß die Schaufeln (9) der Leiteinrichtung (8) von der Mitte des Kanals (6) zu dessen Rand hin und von strömungsaufwärts nach strömungsabwärts hin im Kanal (6) gepfeilt schräggestellt sind.

7. Gegendrehmomentvorrichtung nach einem der Ansprüche 3 bis 6, **dadurch gekennzeichnet**, daß der Abstand entsprechend der Achse (X-X) des Kanals (6) zwischen der Rotationsebene (P) des Rotors (7) und der Vorderkante der Schaufeln (9) der Leiteinrichtung (8) am Rande des Kanals (6) eine zwischen 1,3 c und 2,5 c liegende Strecke (dr) ist, wobei c die Tiefe der Blätter (10) des Rotors (7) ist.

8. Gegendrehmomentvorrichtung nach einem der Ansprüche 3 bis 7, **dadurch gekennzeichnet**, daß die Schaufeln (9) der Leiteinrichtung (8) im Kanal (6) einen zum Kanal (6) im wesentlichen koaxialen Körper (11) tragen, der Antriebsorgane des Rotors (7) und Organe zur gemeinsamen Steuerung des Anstellwinkels der Blätter (10) des Rotors enthält, welcher rotierend auf dem Körper (11) angebracht ist.

9. Gegendrehmomentvorrichtung nach einem der Ansprüche 3 bis 8, **dadurch gekennzeichnet**, daß die Schaufeln (9) der Leiteinrichtung (8) ein aerodynamisches Profil vom Typ NACA 65 mit einem zwischen etwa 8 % und etwa 12 % liegenden Dicke-Tiefenverhältnis, einer zwischen etwa 2 % und etwa 2,5 % liegenden Einstechwinkelanstellung gegenüber der Achse (X-X) des Kanals (6) und einer zwischen etwa 20° und etwa 28° liegenden Wölbung haben.

10. Gegendrehmomentvorrichtung nach einem der Ansprüche 3 bis 9, **dadurch gekennzeichnet**, daß ein eine Antriebskraft zum Rotor (7) übertragender Übertragungsarm (13) im Kanal (6) in wesentlichen an der Stelle einer der Schaufeln (9) der Leiteinrichtung (8) angeordnet ist, wobei die profilierten Schaufeln (9) in ihrer Anzahl zumindest gleich mit der um eine Einheit verminderten Anzahl der Blätter (10) des Rotors (7) sind.

11. Gegendrehmomentvorrichtung nach einem der Ansprüche 1 bis 10, **dadurch gekennzeichnet**, daß die Blätter (10) des Rotors (7) ein aerodynamisches Profil vom Typ OAF mit einem Dicke-Tiefenverhältnis und einer Wölbung haben, die sich entsprechend der Spannweite entwickeln, wobei sich zwischen 0,4 R und R das Dicke-Tiefenverhältnis von etwa 13,9 % auf etwa 9,5 % verringert und sich die Verwindung von etwa 17° auf etwa 6,9° oder von etwa 7,25° auf etwa -1,2° vermindert, wobei R der Radius des Rotors (7) ist.

12. Gegendrehmomentvorrichtung nach einem der Ansprüche 1 bis 11, **dadurch gekennzeichnet**, daß der Kanal (6) zwei Teile umfaßt, von denen der eine ein Kollektor (dc) entsprechend dem strömungsaufwärts der Rotationsebene (P) des Rotors gelegenen Teil des Kanals (6) und der andere ein Diffusor (dd) entsprechend dem strömungsabwärts der Rotationsebene (P) gelegenen Teil des Kanals (6) ist, wobei der Kollektor eine Eintrittskonvergenz (19) aufweist, die durch eine konvexe ringförmige Wand strömungsaufwärts hin begrenzt und mit einem konstanten Radius (Rc) abgerundet ist, und sich zur Rotationsebene (P) des Rotors hin mit einer zylindrischen Zone von einer ersten Länge (L1) fortsetzt und wobei der Diffusor von der Rotationsebene (P) des Rotors strömungsabwärts hin eine die zylindrische Zone des Kollektors fortsetzende zylindrische Zone von einer zweiten Länge (L2), dann eine kegelstumpfartige Divergenz (21) mit einem halben Kegelwinkel $\alpha$ und einen divergierenden Austritt (22) aufweist, der durch eine konvexe ringförmige Wand strömungsabwärts hin abgegrenzt und mit einem Radius r abgerundet ist.

**13.** Gegendrehmomentvorrichtung nach Anspruch 12, **dadurch gekennzeichnet**, daß die Lage der Rotationsebene (P) des Rotors in dem durch die zylindrischen Zonen des Kollektors und des Diffusors gebildeten zylindrischen Teil (20) des Kanals (6) in Abhängigkeit von der Tiefe (c) der Blätter des Rotors, von ihrem Bereich mit positivem Anstellwinkel, vom Abstand (a) zwischen ihrer Vorderkante und der Anstellwinkeländerungsachse und von der maximalen Biegungslinie (f) des Blattes, die seine Schlagsteifigkeit charakterisiert, so festgelegt wird, daß die Längen L1 und L2 der zylindrischen Zonen so beschaffen sind, daß:

$$L1 > a \sin (\beta \text{ max}) + f \text{ und } L2 < (c - a) \sin (\beta \text{ max}),$$

wobei $\beta$ max der maximale positive Anstellwinkel der Blätter (10) des Rotors (7) ist.

**14.** Gegendrehmomentvorrichtung nach einem der Ansprüche 12 und 13, **dadurch gekennzeichnet**, daß die Länge (L1) der zylindrischen Zone des Kollektors zwischen etwa 2 % und etwa 8 % des in seinem zylindrischen Teil (20) gemessenen Durchmessers ($\varnothing$) des Kanals (6) liegt, der konstante Radius (Rc) der Eintrittskonvergenz (19) des Kollektors ungefähr 8 % des Durchmessers ($\varnothing$) des Kanals (6) beträgt und sich die Länge (L2) der zylindrischen Zone des Diffusors zwischen etwa 1 % und etwa 3,5 % des Durchmessers ($\varnothing$) des Kanals (6) bewegt.

**15.** Gegendrehmomentvorrichtung nach einem der Ansprüche 12 bis 14, **dadurch gekennzeichnet**, daß der Kegelhalbwinkel ($\alpha$) der kegelstumpfartigen Divergenz (21) zwischen etwa 5 % und etwa 20 % gewählt ist.

**16.** Gegendrehmomentvorrichtung nach einem der Ansprüche 12 bis 15, **dadurch gekennzeichnet**, daß die ringförmige Wand des divergierenden Austritts (22) des Diffusors einen konstanten ersten Radius (r1) von weniger als etwa 1,6 % des Durchmessers ($\varnothing$) des Kanals (6) auf einem sich zum Bug des Hubschraubers hin erstreckenden Kreisbogen (AA), einen konstanten zweiten Radius (r2), der zwischen etwa 4,3 % des Durchmessers ($\varnothing$) des Kanals (6) und dem für die Konvergenz (19) des Kollektors gewählten Radius (Rc) liegt, auf einem sich zum Heck des Hubschraubers hin erstreckenden Kreisbogen (BB), und zwei Zonen (AB) mit sich veränderndem Radius (zwischen r1 und r2) hat, welche die Zonen mit konstanten Radien (r1 und r2) symmetrisch beiderseits einer Längsachse (YY) des Hubschraubers verbinden.

**17.** Gegendrehmomentvorrichtung nach Anspruch 16, **dadurch gekennzeichnet**, daß sich die vordere Zone mit konstantem Radius (r1) auf einem Kreisbogen (AA) entsprechend einem Mittelpunktswinkel von mindestens 210° und die hintere Zone mit konstantem Radius (r2) auf einem Kreisbogen (BB) entsprechend einem Mittelpunktswinkel von 90° erstrecken und zwar symmetrisch oberhalb und unterhalb der erwähnten Längsachse (YY) des Hubschraubers.

**18.** Gegendrehmomentvorrichtung nach einem der vorhergehenden Ansprüche, **dadurch gekennzeichnet**, daß der Kanal (6) in einem Tragkörper (5) angeordnet ist, der in einem Hubschrauber-Heckteil integriert ist, welcher das hintere Ende eines Endstückträgers (1) und ein Leitwerk (2) mit wenigstens einer Leitwerkfläche (3) enthält.

**19.** Gegendrehmomentvorrichtung nach Anspruch 18, **dadurch gekennzeichnet**, daß das Leitwerk (2) ein zweiflächiges ist und zwar entweder von einem kreuzförmigen Leitwerktyp bzw. von einem T- oder V-Leitwerktyp oberhalb des Kanals (6).

**20.** Gegendrehmomentvorrichtung nach einem der Ansprüche 18 und 19, **dadurch gekennzeichnet**, daß wenigstens eine Leitwerkfläche des Leitwerks eine schwenkbare Leitwerkflächenklappe aufweist.

FIG.1.

FIG.2.

FIG.3.

FIG.7.

FIG.6.

# FIG.5.

# FIG.4.